# EUROPEAN PATENT APPLICATION

(11) **EP 4 844 872 A1**
(43) Date of publication of application: **25.11.2026**
(21) Application number: 25874199.0
(22) Date of filing: 25.09.2025
(51) Int. Cl.: H01M 10/0567, H01M 10/0569, H01M 10/0568, H01M 10/052, H01M 4/58, H01M 4/587, H01M 4/38, H01M 4/136, H01M 4/133

(54) **NON-AQUEOUS ELECTROLYTE AND LITHIUM SECONDARY BATTERY COMPRISING SAME**

(30) Priority: 26.09.2024 KR 20240131182; 26.09.2024 KR 20240131183; 26.09.2024 KR 20240131184; 24.09.2025 KR 20250138532
(71) Applicant: LG Energy Solution, Ltd., Seoul 07335 (KR)
(72) Inventor: IM, Tae Yeong, Daejeon 34122 (KR); HAN, Jun Hyeok, Daejeon 34122 (KR); OH, Young Ho, Daejeon 34122 (KR); JEONG, You Kyeong, Daejeon 34122 (KR); KO, Yoon Seok, Daejeon 34122 (KR); SUH, Soo Min, Daejeon 34122 (KR); AHN, Kyoung Ho, Daejeon 34122 (KR); LEE, Chul Haeng, Daejeon 34122 (KR)
(74) Representative: Hoffmann Eitle
(86) International application number: PCT/KR2025/015101
(87) International publication number: WO 2026/071743

(57) **Abstract**

The present disclosure relates to a non-aqueous electrolyte comprising a lithium salt, an organic solvent and additives, wherein the organic solvent includes a carbonate-based organic solvent and a cyclic lactone compound, the additives include a first additive and a second additive, wherein the first additive is a fluorine-based compound, and the second additive is a compound represented by Formula 1, and a lithium secondary battery comprising the same.

## Description

### [TECHNICAL FIELD]

### Cross-reference to Related Applications

This application claims priority from Korean Patent Application No.10-2024-0131182, filed on September 26, 2024, Korean Patent Application No. 10-2024-0131183, filed on September 26, 2024, Korean Patent Application No.10-2024-0131184, filed on September 26, 2024, and Korean Patent Application No.10-2025-0138532, filed on September 24, 2025, and the entire contents of which are incorporated by reference herein.

### TECHNICAL FIELD

The present disclosure relates to a non-aqueous electrolyte and a lithium secondary battery comprising the same.

### [BACKGROUND]

As dependence on electric energy is increasing in modern society, development of a large-capacity power storage device that can stably supply power and increase production is in the spotlight. In addition, as the performance of electronic products from small electronic devices such as mobile phones to medium to large-sized electronic devices such as electric vehicles is improved, there is a growing need for high-capacity portable power. In the case of a lithium secondary battery having the highest potential, the lithium secondary battery satisfies high-capacity power storage performance, and thus has been utilized in various places from small electronic devices to electric vehicles (EVs) and power storage devices (ESSs).

The lithium secondary battery generally comprises a positive electrode including a positive electrode active material, a negative electrode including a negative electrode active material, an electrolyte serving as a medium for transferring lithium ions, and a separator. In this case, a carbon-based active material, a silicon-based active material, a lithium transition metal oxide, a lithium metal, and the like can be used as the negative electrode active material. Further, a lithium transition metal oxide such as lithium cobalt oxide (LiCoO₂), lithium nickel oxide (LiNiO₂), a lithium nickel-cobalt-manganese composite oxide, or lithium iron phosphate can be used as the positive electrode active material.

When the lithium secondary battery is charged, lithium ions may be generated from the positive electrode, and the lithium ions may be stacked or converted into an alloy form in the negative electrode and stored, and the discharging process may proceed in the opposite direction. During the charging and discharging of the lithium secondary battery, the movement of lithium ions to the positive electrode and the negative electrode should, theoretically, be reversible, but the actual movement of lithium inside the lithium secondary battery may be partially irreversible. Specifically, the medium through which the lithium ions can be transferred is an electrolyte, and the lithium ions during charging are mostly deposited/alloyed inside the negative electrode active material, but some of the lithium ions are reduced together with the organic and inorganic materials constituting the electrolyte to form a nano-sized organic and inorganic composite on the surface of the negative electrode material, which is an irreversible permanent loss of the lithium ions provided by the positive electrode. The organic and inorganic film formed as such is referred to as a solid electrolyte interface layer (SEI layer). On the surface of the positive electrode active material, a solid-electrolyte interface layer may be formed through the oxidation reaction of a material constituting the electrolyte. When the solid electrolyte interface layer is formed, irreversible loss of lithium ions may be reduced, and a driving potential of the electrolyte may be widely secured to allow smooth reversible movement of the lithium ions between the positive electrode and the negative electrode. Such a solid electrolyte interface layer may also contribute to lowering an energy barrier required when lithium ions transfer charges to the negative electrode or the positive electrode depending on the components therein. Thus, the appropriate design of the solid-electrolyte interface layer has become a research task for improving the performance of lithium secondary batteries.

Specifically, the life characteristics and durability of the lithium secondary battery may be determined depending on the stability of the solid-electrolyte interface layer. For example, as the charging and discharging of the lithium secondary battery proceed, additional reduction of lithium ions may occur on the surface of the negative electrode material due to the instability of the initially formed solid-electrolyte interface layer, which may result in the formation of a film having a thickness greater than that of the initially formed solid-electrolytic interface layer. Due to the additional loss of lithium ions, an interfacial layer thicker than the initially generated solid-electrolyte interfacial layer may be additionally generated on the surface of the positive electrode material, or structural degradation of the positive electrode material may occur. This may be one of the causes of an increase in the resistance of the lithium secondary battery. When the lithium secondary battery is exposed to high temperatures, decomposition of materials constituting the electrolyte may occur, and thus, the performance of the electrolyte may deteriorate due to the generated side reactants, and the resistance of the lithium secondary battery may increase. As the lithium secondary battery is exposed to high temperatures and repeatedly charged and discharged, due to the increase in resistance, the positive electrode and the negative electrode may be driven at voltages in states higher and lower than the state of the initial life, and thus, electrolyte oxidation and reduction reactions in the positive electrode and the negative electrode are accelerated to deteriorate the performance of the lithium secondary battery. Incidentally, due to the instability of the solid-electrolyte interface layer, continuous oxidation and reduction reaction of the electrolyte may occur, generating gas inside the lithium secondary battery. That is, from the viewpoint of stably driving lithium secondary batteries and ensuring battery performance such as long life, high-temperature durability, and a reduction in gas generation, it is an important task to enhance the stability of the solid-electrolyte interface layer.

### [DISCLOSURE OF THE INVENTION]

### [TECHNICAL PROBLEM]

The present disclosure aims to address the above problems, and provides a non-aqueous electrolyte that can enhance the stability of the solid-electrolyte interface layer formed on the negative and positive electrodes, enhance the structural stability of the positive electrode by suppressing lithium loss of the positive electrode, and include components having low resistance, thereby securing excellent durability and stability at low temperatures, room temperature and high temperatures.

In addition, the present disclosure aims to provide a lithium secondary battery with improved overall performance, in which low-temperature life, low-temperature output, high-speed charging, room temperature life, high-temperature storage characteristics, and high-temperature life characteristics are improved by including the non-aqueous electrolyte.

### [TECHNICAL SOLUTION]

[1] The present disclosure relates to a non-aqueous electrolyte comprising a lithium salt, an organic solvent and an additive, wherein the organic solvent includes a carbonate-based organic solvent and a cyclic lactone compound. The additive includes a first additive and a second additive, wherein the first additive is a fluorine-based compound, and the second additive is a compound represented by Formula 1 below:

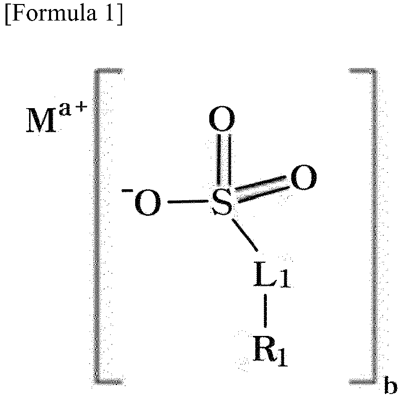

In Formula 1 above,

R₁ is -O-NO₂, L₁ is an alkyleneoxy group having 1 to 5 carbon atoms, M is a metal cation or an organic cation, wherein a is the valence of M when M is a metal cation, and a is 1 when M is an organic cation, and a=b.

[2] The present disclosure provides a non-aqueous electrolyte of [1] above, the carbonate-based organic solvent includes a cyclic carbonate-based organic solvent.

[3] The present disclosure provides a non-aqueous electrolyte of [1] or [2] above, the cyclic lactone compound is gamma-butyrolactone.

[4] The present disclosure provides a non-aqueous electrolyte of at least one of [1] to [3] above, the fluorine-based compound is at least one of a fluorine-based phosphate compound, a fluorine-based acrylate compound, and a fluorine-based propargyl compound.

[5] The present disclosure provides a non-aqueous electrolyte of at least one of [1] to [4] above, the fluorine-based phosphate compound is lithium difluorophosphate.

[6] The present disclosure provides a non-aqueous electrolyte of at least one of [1] to [5] above, the fluorine-based acrylate compound includes a compound represented by Formula 2 below.

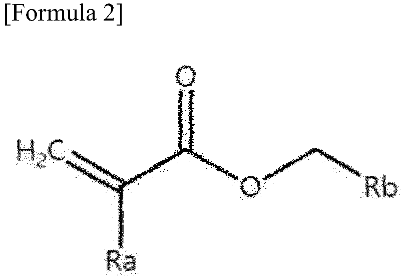

In Formula 2,
Ra is hydrogen or an alkyl group having 1 to 3 carbon atoms,
Rb is an alkyl group having 1 to 20 carbon atoms substituted with at least one fluorine.

[7] The present disclosure provides a non-aqueous electrolyte of at least one of [1] or [6] above, Ra is hydrogen, and Rb is an alkyl group having 3 to 15 carbon atoms substituted with at least one fluorine in Formula 2 above.

[8] The present disclosure provides a non-aqueous electrolyte of at least one of [1] to [7] above, the fluorine-based acrylate compound includes at least one selected from compounds represented by Formula 2A to Formula 2C below.

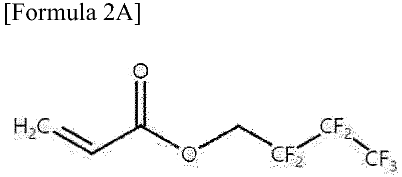

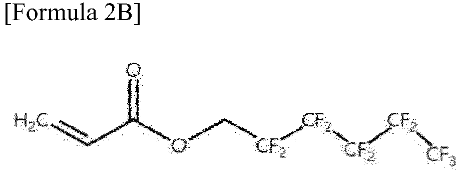

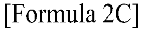

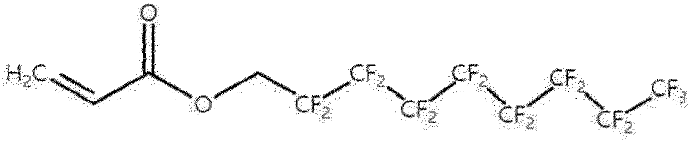

[9] The present disclosure provides a non-aqueous electrolyte of at least one of [1] to [8] above, the fluorine-based propargyl compound includes a compound represented by Formula 3 below.

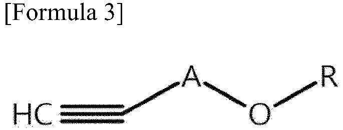

In Formula 3 above, A is -C(O)- or -CH₂-, and R is an alkyl group having 1 to 20 carbon atoms substituted with at least one fluorine.

[10] The present disclosure provides a non-aqueous electrolyte of at least one of [1] to [9] above, R is an alkyl group having 3 to 15 carbon atoms substituted with at least one fluorine in Formula 3 above.

[11] The present disclosure provides a non-aqueous electrolyte of at least one of [1] to [10] above, the fluorine-based propargyl compound includes at least one selected from compounds represented by Formula 3A to Formula 3D below.

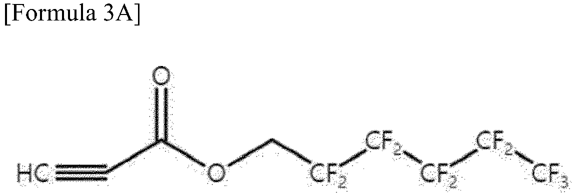

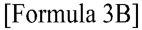

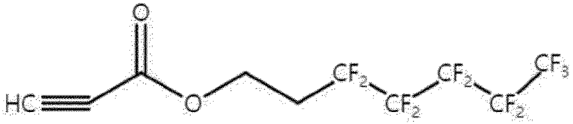

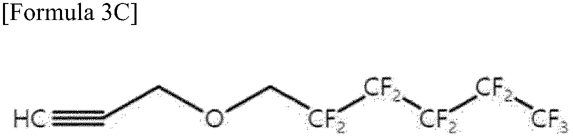

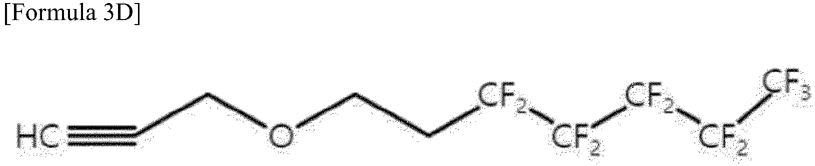

[12] The present disclosure provides a non-aqueous electrolyte of at least one of [1] to [11] above, the above first additive is included in an amount of 0.01 wt% to 10.0 wt% based on the total weight of the non-aqueous electrolyte.

[13] The present disclosure provides a non-aqueous electrolyte of at least one of [1] to [12] above, M is a metal cation, and is any one selected from Li, K, Ca, Mg and Cs in Formula 1 above.

[14] The present disclosure provides a non-aqueous electrolyte of at least one of [1] to [13] above, M is an organic cation, and is any one selected from compounds represented by Formula M-1 to Formula M-6 below.

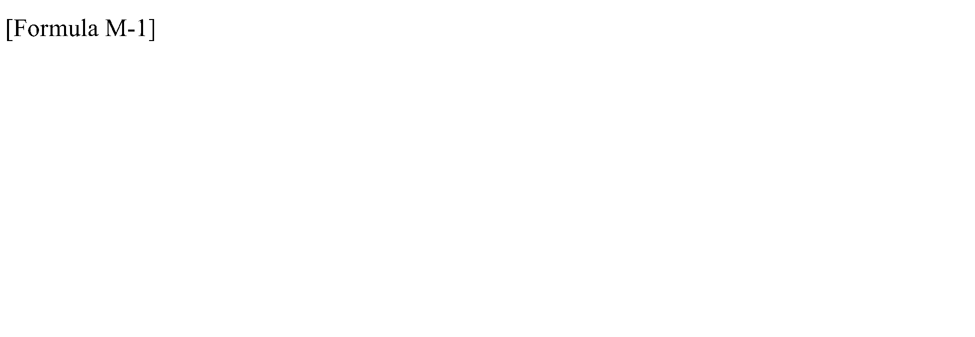

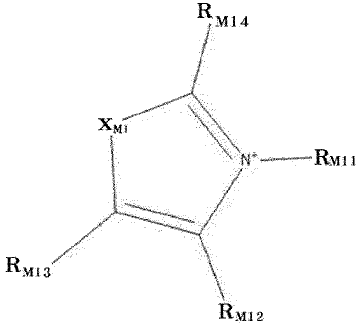

In Formula M-1, X_{M1} is -N(R_{M15})- or -S-, and R_{M11}, R_{M12}, R_{M13}, R_{M14} and R_{M15} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms.

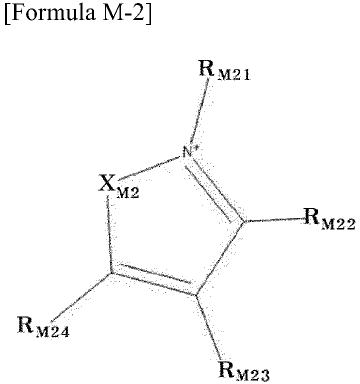

In Formula M-2 above, X_{M2} is -N(R_{M25})- or -S-, and R_{M21}, R_{M22}, R_{M23}, R_{M24} and R_{M25} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms.

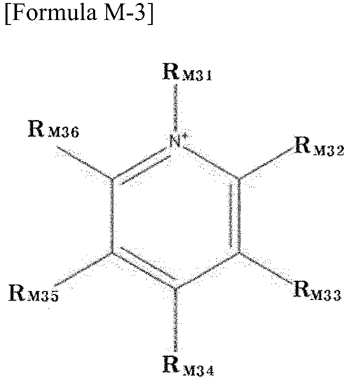

In Formula M-3 above, R_{M31}, R_{M32}, R_{M33}, R_{M34}, R_{M35} and R_{M36} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms.

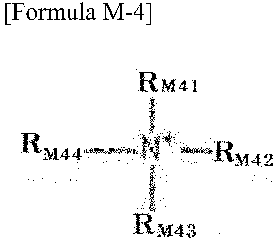

In Formula M-4 above, R_{M41}, R_{M42}, R_{M43} and R_{M44} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M41}, R_{M42}, R_{M43} and R_{M44} may be bonded to each other to form an aliphatic hydrocarbon ring.

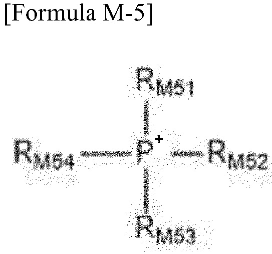

In Formula M-5 above, R_{M51}, R_{M52}, R_{M53} and R_{M54} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M51}, R_{M52}, R_{M53} and R_{M54} may be bonded to each other to form an aliphatic hydrocarbon ring.

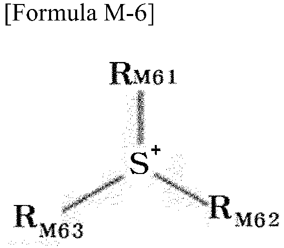

In Formula M-6, R_{M61}, R_{M62} and R_{M63} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M61}, R_{M62} and R_{M63} may be bonded to each other to form an aliphatic hydrocarbon ring.

[15] The present disclosure provides a non-aqueous electrolyte of one or more of [1] to [14] above, the compound represented by Formula 1 above includes a compound represented by Formula 1-A below.

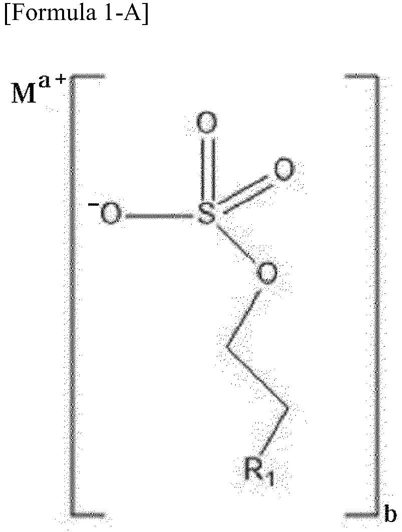

In Formula 1-A, each of M, a, b and R₁ is as defined in Formula 1 above.

[16] The present disclosure provides a non-aqueous electrolyte of at least one of [1] to [15] above, the compound represented by Formula 1 above includes a compound represented by Formula 1-A-1 below.

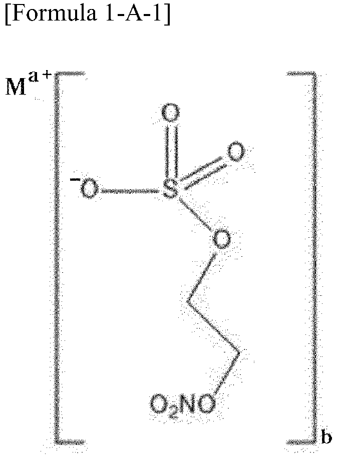

In Formula 1-A-1, each of M, a, and b is as defined in Formula 1 above.

[17] The present disclosure provides a non-aqueous electrolyte of at least one of [1] to [16] above, the compound represented by Formula 1 above includes a compound represented by Formula 1-a-1 below.

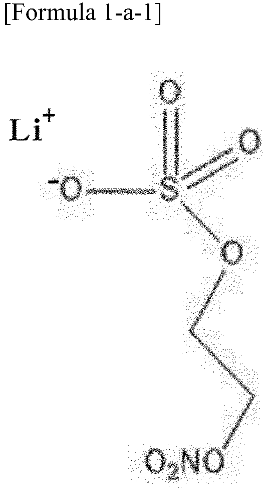

[18] The present disclosure provides a non-aqueous electrolyte of at least one of [1] to [17] above, the compound represented by Formula 1 above is included in an amount of 0.1 wt% to 3.0 wt% in the non-aqueous electrolyte.

[19] The present disclosure provides a non-aqueous electrolyte of at least one of [1] to [18] above, the non-aqueous electrolyte includes a third additive, wherein the third additive contains at least one of ethylene sulfate and 1,3-propane sultone.

[20] The present disclosure provides a non-aqueous electrolyte of at least one of [1] to [19] above, a total content of ethylene sulfate, and 1,3-propane sultone is 0.1 wt% to 2.0 wt% based on the total weight of the non-aqueous electrolyte.

[21] The present disclosure provides a lithium secondary battery, comprising a positive electrode, a negative electrode facing the positive electrode, a separator disposed between the negative electrode and the positive electrode, and the non-aqueous electrolyte according to the above [1].

[22] The present disclosure provides a lithium secondary battery of [21] above, the negative electrode includes a negative electrode active material, wherein the negative electrode active material includes at least one selected from a carbon-based active material and a silicon-based active material.

[23] The present disclosure provides a lithium secondary battery of at least one of [21] or [22] above, the positive electrode includes a positive electrode active material, and the positive electrode active material contains lithium iron phosphate.

### [ADVANTAGEOUS EFFECTS]

The non-aqueous electrolyte according to the present disclosure uses an organic solvent containing a cyclic lactone compound and a fluorine-based compound and a salt-form compound containing an organosulfonyl group represented by Formula 1 and nitrogen and/or oxygen as an additive in combination, thereby forming a film capable of reducing resistance while having high durability on the positive and negative electrode surfaces. In particular, it is possible to improve the electrolyte impregnation of a positive electrode including a high-loading lithium iron phosphate-based positive electrode active material, and to form a film capable of reducing resistance while having strong durability on the high-loading positive electrode surface. Therefore, when such a non-aqueous electrolyte of the present disclosure is applied to a lithium secondary battery, excellent life performance and storage performance can be exhibited even under conditions such as high temperatures and high voltages, and output performance at low temperatures can be improved.

### [BRIEF DESCRIPTION OF THE DRAWINGS]

FIG. 1 shows the XIC results for the compound represented by Formula 1-a-1.
FIG. 2 shows an MS spectrum for the compound represented by Formula 1-a-1.
FIG. 3 shows MS/MS analysis results (Tandem MS, double mass spectrometry) for the compound represented by Formula 1-a-1.
FIG. 4 shows the ¹H-NMR spectrum for a preparation solution of the compound represented by Formula 1-a-1.

### [DETAILED DESCRIPTION]

It will be understood that terms or words used in the present disclosure and claims are used merely to describe exemplary embodiments, and shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

For example, it will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the disclosure each denote the number of carbon atoms included in a specific functional group. That is, the functional group may include "a" to "b" carbon atoms. For example, an "alkylene group having 1 to 5 carbon atoms" refers to an alkylene group including carbon atoms with a carbon number of 1 to 5, that is, -CH₂-, -CH₂CH₂-, -CH₂CH₂CH₂-, -CH₂(CH₃)CH-, - CH₂CH₂CH₂CH₂CH₂- and -CH(CH₃)CH₂CH₂-.

In addition, in the present specification, the term "alkylene group" refers to a branched or unbranched aliphatic hydrocarbon group or a functional group in a form in which one hydrogen atom is removed from each carbon atom located at both ends of the aliphatic hydrocarbon group. In an embodiment, the alkylene group may be substituted or unsubstituted. The alkylene group includes, but is not limited to, a methylene group, an ethylene group, a propylene group, an isopropylene group, a butylene group, an isobutylene group, a tert-butylene group, a pentylene group, a 3-pentylene group, and the like, each of which may be optionally substituted in other embodiments.

Unless otherwise defined in the specification, the expression "substitution" denotes that at least one hydrogen bonded to carbon is substituted with another element such as fluorine.

In addition, unless otherwise specified in the present disclosure, the expression "*" denotes binding sites in a formula.

In addition, in this specification, the "loading amount" refers to the amount of active materials per unit area of the positive electrode active material layer including the lithium iron phosphate-based positive electrode active material having an olivine structure formed on the current collector, and is expressed as "g/cm²". Here, in this specification, the "loading amount of the positive electrode" refers to the sum of the loading amounts of both surfaces of the positive electrode.

Hereinafter, the present disclosure will be described in more detail.

The non-aqueous electrolyte and/or lithium secondary battery comprising the same according to the present disclosure may include at least one of the constitutions disclosed below, and may include any combination between technically possible constitutions among the following constitutions.

### Non-aqueous electrolyte

The present disclosure relates to a non-aqueous electrolyte, and more specifically a non-aqueous electrolyte for a lithium secondary battery.

Specifically, the non-aqueous electrolyte of the present disclosure may comprise a lithium salt; an organic solvent; and an additive.

The organic solvent may include a carbonate-based organic solvent and a cyclic lactone compound.

The additive may include a first additive and a second additive.

The first additive may be a fluorine-based compound.

The second additive may be a compound represented by Formula 1 below.

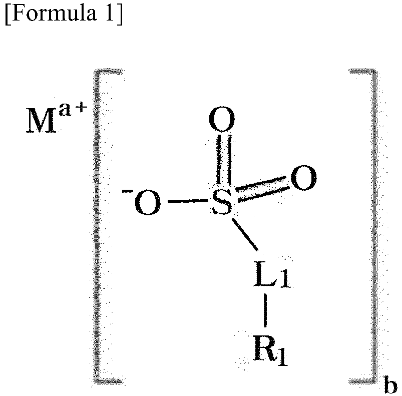

In Formula 1,
R₁ is -O-NO₂, and L₁ is an alkyleneoxy group having 1 to 5 carbon atoms, M is a metal cation or an organic cation, wherein a is the valence of M when M is a metal cation, and a is 1 when M is an organic cation, and a=b.

The non-aqueous electrolyte according to the present disclosure includes an additive, wherein the additive includes a salt-form compound containing an organosulfonyl group and nitrogen and oxygen (compound represented by Formula 1) in combination with a fluorine-based compound. When having the additive composition as described above, a film capable of reducing resistance while having strong durability can be formed on the positive and negative electrode surfaces. Therefore, when such a non-aqueous electrolyte of the present disclosure is applied to a lithium secondary battery, excellent life performance and storage performance can be exhibited even under conditions such as high temperatures and high voltages, and output performance at low temperatures can be improved.

### (1) Lithium salt

As the lithium salt used in the present disclosure, various lithium salts commonly used in a non-aqueous electrolyte for a lithium secondary battery may be used without limitation. For example, the lithium salt may include Li⁺ as a cation, and may include at least one selected from F⁻, Cl⁻, Br⁻, I⁻, NO₃⁻, N(CN)₂⁻, BF₄⁻, ClO₄⁻, AlO₂⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻ and (CF₃CF₂SO₂)₂N⁻ as an anion.

Specifically, the lithium salt includes at least one selected from the group consisting of LiCl, LiBr, LiI, LiBF₄, LiClO₄, LiAlO₂, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂ and LiBETI (LiN(SO₂CF₂CF₃)₂). Specifically, the lithium salt includes at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂) and LiBETI (LiN(SO₂CF₂CF₃)₂).

The lithium salt may be included in the non-aqueous electrolyte at a concentration of 0.5M to 5M, specifically, 0.8M to 4M, and more specifically 0.8M to 2.5M. In the case in which the concentration of the lithium salt satisfies the above range, this may improve the Li+ transference number and the degree of dissociation of lithium ions, thereby improving the output characteristics of the battery.

Alternatively, the lithium salt may be included in the non-aqueous electrolyte in a balance amount excluding, for example, the organic solvent and additive described later.

### (2) Organic Solvent

The organic solvent is a non-aqueous solvent commonly used in lithium secondary batteries, and is not limited as long as decomposition due to an oxidation reaction or the like during the charging and discharging of the battery can be minimized.

The organic solvent may be included in the non-aqueous electrolyte in a balance amount excluding, for example, the lithium salt and the additive.

Specifically, the organic solvent may include a carbonate-based organic solvent. The carbonate-based organic solvent may specifically include a cyclic carbonate-based organic solvent.

The cyclic carbonate-based organic solvent is an organic solvent having high viscosity and a high dielectric constant, and thus, is an organic solvent capable of dissociating a lithium salt well in an electrolyte, specific examples thereof may include at least one organic solvent selected from ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, more specifically, may include at least one selected from the group consisting of ethylene carbonate (EC) and fluoroethylene carbonate (FEC), and even more specifically may include ethylene carbonate (EC).

The carbonate-based organic solvent may further include a linear carbonate-based organic solvent.

The linear carbonate-based organic solvent is an organic solvent having low viscosity and a low dielectric constant, specifically may include at least one organic solvent selected from dimethyl carbonate (DMC), diethyl carbonate (DEC), dipropyl carbonate (DPC), ethylmethyl carbonate (EMC), methylpropyl carbonate (MPC) and ethylprolyl carbonate (EPC), and more specifically, may include at least one selected from ethylmethyl carbonate and dimethyl carbonate. Even more specifically, it may include ethylmethyl carbonate and dimethyl carbonate.

It is preferable that the linear carbonate-based organic solvent is included in the carbonate-based organic solvent in an amount of 40 vol% or less, 30 vol% or less, 20 vol% or less, or 10 vol% or less. When the linear carbonate-based organic solvent is included in the carbonate-based organic solvent in an amount of 40 vol% or less, the electrolyte can exhibit the effects of securing ionic conductivity and enhancing electric output by reducing viscosity without deteriorating battery durability.

In addition, the organic solvent of the present disclosure may further include a cyclic lactone compound.

The cyclic lactone compound has a high dielectric constant and excellent solubility for lithium salts, and thus can stably dissolve electrolyte salts to ensure high ionic conductivity. In addition, the cyclic lactone compound has a high boiling point (about 204°C) and high thermal and oxidation stability, and can suppress electrolyte decomposition even in a high-temperature environment, thereby improving the cycle life and high-temperature stability of the battery. In particular, the cyclic lactone compound can be easily mixed with a carbonate-based solvent to easily control the electrolyte viscosity, and has excellent solubility in a second additive described below, so that the second additive described below can decompose on the positive and negative electrode surfaces earlier than the organic solvent to form a stable organic/inorganic film, thereby further improving the film- forming effect. Further, the organic/inorganic film formed from the second additive reduces side reactions between the electrode and the electrolyte, which leads to increased electrochemical stability of the cyclic lactone compound, thereby enabling more stable dissolution of the electrolyte salt and ensuring high ionic conductivity. Therefore, compared to when only a carbonate solvent is used as the electrolyte solvent, a more stable SEI film can be formed, thereby resulting in a remarkable effect of improving battery cycle characteristics and high-temperature characteristics.

In addition, in the non-aqueous electrolyte of the present disclosure, the carbonate-based organic solvent and the cyclic lactone compound may be included in a volume ratio of 1:99 to 40:60, specifically, 10:90 to 40:60, and 20:80 to 40:60.

When the mixing ratio of the carbonate-based organic solvent and the cyclic lactone compound satisfies the above range, this can exhibit high ion transfer characteristics and secure battery performance with low resistance characteristics. Specifically, when the cyclic lactone compound is included in a volume ratio of 60 or more, the lithium ion transfer characteristics can be improved to enhance the resistance reducing effect. In addition, the electrolyte viscosity can easily be controlled, and simultaneously excellent solubility in the second additive described later can be secured, leading to the formation of a more stable SEI film. In addition, when the cyclic lactone compound is included in a volume ratio of 99 or less, a stable film can be formed, leading to further improved battery life characteristics.

Meanwhile, the organic solvent may further include at least one of an ester-based organic solvent, an ether-based organic solvent, a glyme-based solvent, and a nitrile-based organic solvent, together with the carbonate-based organic solvent and cyclic lactone compound.

The ester-based organic solvent may include a linear ester-based organic solvent. The linear ester-based organic solvent may include at least one selected from methyl acetate, ethyl acetate, propyl acetate, butyl acetate, methyl propionate, ethyl propionate, propyl propionate, and butyl propionate.

Any one selected from dimethyl ether, diethyl ether, dipropyl ether, methylethyl ether, methylpropyl ether, ethylpropyl ether, 1,3-dioxolane (DOL), and 2,2-bis (trifluoromethyl )-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, diglyme, triglyme, and tetra-glyme (TEGDME) as a solvent with low reactivity with metals, but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### (3) Additive

The electrolyte of the present disclosure may include two or more additives to improve electrolyte impregnation properties on the electrode surface, have low resistance to improve charge mobility, and form a stable film capable of suppressing film deterioration when driven at high temperature.

### (3-1) First Additive

The present disclosure may include a fluorine-based compound as a first additive.

The fluorine-based compound releases F ions and fluorine-containing radicals when reduced and oxidized, and these components can form a highly durable fluorine-containing inorganic film based on lithium fluoride (LiF) on the electrode surface, and can improve the ionic conductivity of the film and simultaneously suppress electrolyte decomposition caused by side reactions between the electrode and the electrolyte at high temperature, thereby suppressing metal elution from the positive electrode.

Such a fluorine-based compound is preferably a salt-form compound to facilitate the release/desorption of F ions or fluorine-containing radicals during electrochemical decomposition on the positive and negative electrode surfaces in the initial activation process, or a compound having at least one double bond or a triple bond functional group in the structure.

Specifically, the fluorine-based compound may include at least one selected from a fluorine-based phosphate compound, a fluorine-based acrylate compound, and a fluorine-based propargyl compound.

The fluorine-based phosphate compound may include lithium difluorophosphate in a lithium salt form.

Specifically, the fluorine-based acrylate compound may include a compound represented by Formula 2 below.

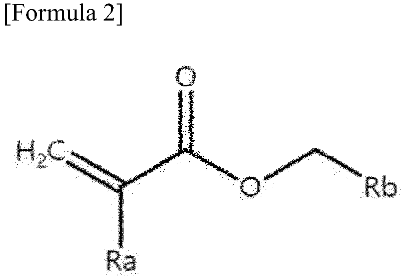

In Formula 2,
Ra is hydrogen or an alkyl group having 1 to 3 carbon atoms,
Rb is an alkyl group having 1 to 20 carbon atoms substituted with at least one fluorine.

The fluorine-based acrylate compound may cause radicals as a double bond (C=C) functional group included in the molecular structure is reduced and decomposed, which may promote the decomposition reaction of additives. As a result, the fluorine-based acrylate compound is electrochemically decomposed on the positive and negative electrode surfaces during the initial activation process, thereby forming a fluorine-containing film having enhanced flame retardancy.

Specifically, in Formula 2, Ra is hydrogen, and Rb may be an alkyl group having 3 to 15 carbon atoms in which at least one fluorine is substituted, or may be an alkyl group having 3 to 7 carbon atoms in which at least one fluorene is substituted. That is, when the number of carbon atoms of Rb in Formula 2 above is 3 or more, the flame retardancy is further improved as the fluorine element content increases, thereby forming a film having improved high-temperature durability. On the other hand, in Formula 2 above, when the number of carbon atoms of Rb exceeds 20, the material viscosity and non-polarity increase due to the excess content of the fluorine element. As a result, the solubility in the electrolyte decreases, reducing electrolyte impregnation and leading to poor battery performance. In particular, in Formula 2 above, Rb may include a perfluorinated structure.

Specifically, the fluorine-based acrylate compound may be at least one selected from compounds represented by Formula 2A to Formula 2C below.

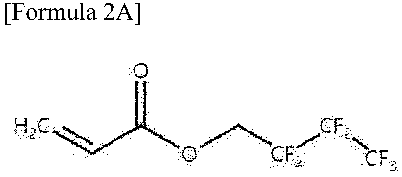

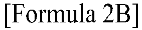

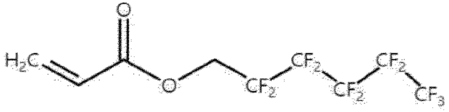

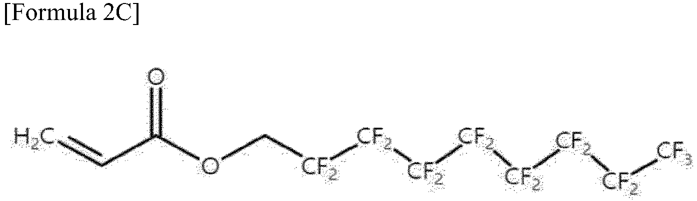

Specifically, the fluorine-based propargyl compound may include a compound represented by Formula 3 below.

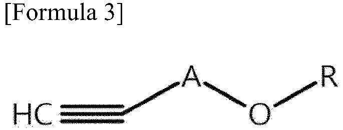

In Formula 3 above, A is -C(O)- or -CH₂-, and R is an alkyl group having 1 to 20 carbon atoms substituted with at least one fluorine.

The fluorine-based propargyl compound represented by Formula 3 above may form a flame-retardant and robust fluorine-containing film as the triple bond (-C≡C-) included at the end of the molecular structure, i.e., a propargyl functional group and an ether group (-O-) or a propiolate group (HC≡C(=O)-O-R'), is electrochemically decomposed on the positive and negative electrode surfaces during the initial activation process, thereby generating radicals, and promoting the decomposition reaction of the additives caused by these radicals.

Meanwhile, in Formula 3, R may be an alkyl group having 3 to 15 carbon atoms in which at least one fluorine is substituted, or may be an alkyl group having 3 to 7 carbon atoms in which at least one fluorene is substituted. Specifically, R may include a perfluorinated structure.

When the number of carbon atoms of R in Formula 3 above is 3 or more, the flame retardancy is further improved as the fluorine element content increases, thereby forming a film having improved high-temperature durability. In Formula 3 above, when the number of carbon atoms of R exceeds 20, the material viscosity and non-polarity increase due to the excess content of the fluorine element. As a result, the solubility in the electrolyte decreases, which may result in poor battery performance.

Specifically, the fluorine-based propargyl compound may be at least one selected from compounds represented by Formula 3A to Formula 3D below.

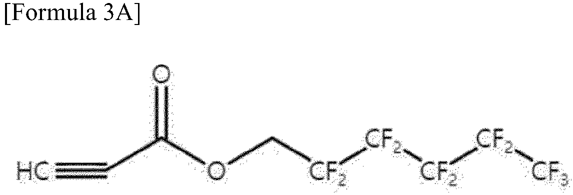

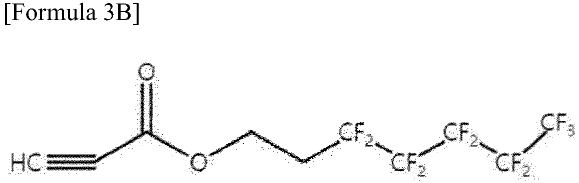

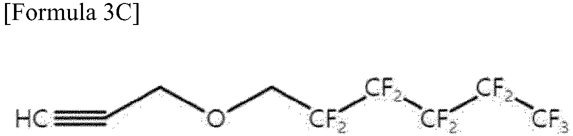

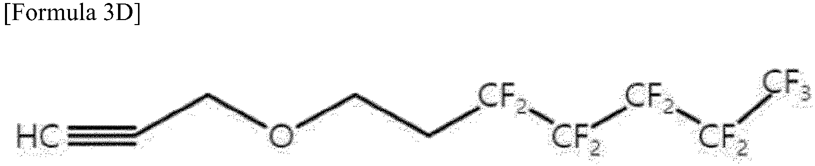

The first additive may be included in a specific amount in the non-aqueous electrolyte. Specifically, the first additive above may be included in the non-aqueous electrolyte in an amount of 0.01 wt% or more, 0.03 wt% or more, 0.05 wt% or more, 0.07 wt% or more, 0.1 wt% or more, 0.15 wt% or more, 0.2 wt% or more, 0.25 wt% or more, 0.3 wt% or more, 0.35 wt% or more, 0.5 wt% or more, 0.7 wt% or more or 0.9 wt% or more based on the total weight of the non-aqueous electrolyte. In addition, the first additive above may be included in an amount of 10 wt% or less, 8 wt% or less, 6 wt% or less, 5 wt% or less, 4 wt% or less, 3 wt% or less or 2 wt% or less based on the total weight of the non-aqueous electrolyte. The above numerical ranges may be appropriately combined, and specifically the first additive may be from 0.01 wt% to 10 wt%, from 0.05 wt% to 5 wt%, or preferably from 0.1 wt% to 3 wt%.

When the content of the first additive of the present disclosure satisfies the above range, the first additive may serve as an effective ion transporter without acting as a resistor on the positive and negative electrode surfaces. That is, when the first additive is included in an amount of 0.01 wt% or more, this can effectively form a film uniformly. When the first additive is included in an amount of 10 wt% or less, this can suppress an increase in resistance caused by side reactions or excess film formation.

Meanwhile, when the fluorine-based compound is mixed with the second additive described later, this can form a film containing not only the positive/negative fluorine component but also nitrogen and oxygen. The film containing these components is not only robust and stable enough to withstand repeated charging and discharging, but also the components present in the film play a catalytic role to reduce the resistance of lithium ions transferred from the electrolyte to the electrode, resulting in significantly low activation energy. As a result, as lithium ion conductivity may be significantly improved, the cell resistance can be effectively reduced, thereby achieving enhanced high-temperature and low-temperature storage characteristics as well as long-term cycle characteristics of secondary batteries may be achieved.

### (3-2) Second Additive

In addition, the present disclosure may include a compound represented by Formula 1 below as a second additive.

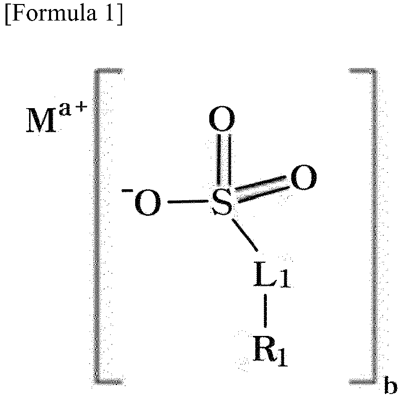

In Formula 1,
R₁ is -O-NO₂, and L₁ is an alkyleneoxy group having 1 to 5 carbon atoms, M is a metal cation or an organic cation, wherein a is the valence of M when M is a metal cation, and a is 1 when M is an organic cation, and a=b.

The compound represented by Formula 1 above contains a salt-form compound containing an organosulfonyl group, nitrogen, and oxygen, thereby forming a film with strong durability on the positive and negative electrode surfaces and can reduce resistance.

Specifically, the compound represented by Formula 1 includes an organosulfonyl group in its structure, which can be reduced and decomposed before the organic solvent during charging and discharging, thereby uniformly forming a solid-electrolyte interface layer including lithium sulfide and a lithium sulfur oxide, which exhibit excellent ionic conductivity, on the negative electrode surface. The formed solid-electrolyte interface layer can act as an effective ion transporter, and thus suppress the degradation of the negative and positive electrodes. In addition, the solid-electrolyte interface layer derived from the functional group has excellent durability, thereby preventing the deterioration of the solid-electrolyte interface layer and the transition metal elution of the positive electrode caused by the deterioration. In addition, the compound represented by Formula 1 included as the additive may contain nitrogen as an anionic terminal group in the structure to form a solid-electrolyte interface layer containing lithium nitride, lithium nitrate, lithium oxide, etc. on the surface of the negative electrode. This can improve the lithium ion diffusivity within the solid-electrolyte interface layer, reduce resistance, have excellent high-temperature durability, which minimizes reversible lithium ion loss, and prevents side reactions between the electrolyte and the positive electrode, thereby effectively suppressing transition metal elution from the positive electrode.

Meanwhile, in the case of an existing lithium nitrate-based additive (e.g., LiNO₃), when it is introduced into an electrode film component, the growth of the non-uniform solid-electrolyte interface layer induces a reduction reaction of the organic solvent, leading to a problem of increased resistance and deteriorated output performance. In addition, a lithium nitrate-based additive has a problem in that it is hardly soluble in a carbonate-based organic solvent, etc. On the other hand, the compound represented by Formula 1 above according to the present disclosure is a salt-form compound containing an organosulfonyl group and nitrogen and is capable of forming a uniform solid-electrolyte interface layer, suppressing the reduction reaction of an organic solvent, and of forming an electrode film having low resistance, and improving output performance even under low-temperature conditions in which the transport characteristics of lithium ions are problematic.

In particular, when the compound represented by Formula 1 above is used as an electrolyte additive, the uniform formation of the solid-electrolyte interface layer is achieved by simultaneously containing an organosulfonyl group and nitrogen in one compound structure. When a substance that does not simultaneously contain an organosulfonyl group and nitrogen in a compound, such as lithium nitrate and cyclic sulfate, is used as the electrolyte additive, the solid-electrolyte interface layer is formed in a particulate form or in a non-uniform form, making it impossible to achieve the effects of preventing the reduction decomposition of the organic solvent, forming a low-resistance film, suppressing the elution of transition metals from the positive electrode, preventing the reduction reaction of transition metal ions, etc.

That is, the compound represented by Formula 1 above can achieve a robust and highly durable electrode film without deteriorating the transport characteristics and output performance of lithium ions. Accordingly, the non-aqueous electrolyte including the compound represented by Formula 1 above can effectively protect the electrode in an environment, in which side reactions of the electrolyte, positive electrode collapse, or SEI film breakage of the negative electrode are likely to occur, such as high temperature and high voltage, thereby significantly improving the life performance and storage performance of the lithium secondary battery, particularly under high temperature and high voltage. That is, the compound represented by Formula 1 above is highly preferable in terms of achieving the effects of improving the output performance, life performance, and storage performance of the lithium secondary battery.

The compound represented by Formula 1 above is included in an amount of 0.1 wt% to 3.0 wt% in the above non-aqueous electrolyte. When the content of the compound represented by Formula 1 above satisfies the above numerical range, a strong inorganic film containing lithium-nitrogen, lithium-oxygen, lithium-sulfur bonds, and the like can be formed on the positive and negative electrode surfaces, while preventing issues such as side reactions caused by additives, decreased capacity, and increased resistance. Therefore, in order for the present disclosure to exhibit the effects resulting from the application of the compound represented by Formula 1, it is preferable that it is used within the above-described range, thereby uniformly forming a robust inorganic film containing lithium-nitrogen bond, lithium-oxygen bond, lithium-sulfur bond, etc. on the positive electrode and the negative electrode surfaces, while suppressing the disadvantages of side reactions, deteriorated capacity, and increased resistance due to the additive as much as possible, thereby effectively suppressing transition metal elution from the positive electrode and side reactions between the electrolyte and the electrode while operating as an ion transporter. As a result, excellent high-temperature durability and low-temperature output performance can be achieved.

Specifically, the compound represented by Formula 1 above may be included in the non-aqueous electrolyte in an amount of 0.1 wt % or more, 0.2 wt % or more, 0.3 wt % or more, 0.4 wt % or more, 0,5 wt % or more, 0 .6 wt % or more, 0.7 wt % or more, 0.8 wt % or more, 0.9 wt % or more, 1 wt % or more, 1.2 wt % or more, 1.3 wt % or more, 1.4 wt % or more, or 1.4 wt % or more. The compound represented by Formula 1 above may be included in the non-aqueous electrolyte in an amount of 3.0 wt% or less, 2.9 wt% or less, 2.8 wt% or less, 2.7 wt% or less, 2.6 wt% or less, 2.5 wt% or less, 2.4 wt% or less, 2.3 wt% or less, 2.2 wt% or less, 2.1 wt% or less, or 2.0 wt% or less. The above ranges can be combined with each other without limitation.

In Formula 1 above, M may be a metal cation or an organic cation.

Specifically, when M is a metal cation, M may be any one selected from Li, K, Ca, Mg and Cs, and may be, for example, Li.

In addition, when M is an organic cation (i.e., a cation in the form of an organic compound), M may be any one selected from compounds represented by Formula M-1 to Formula M-6.

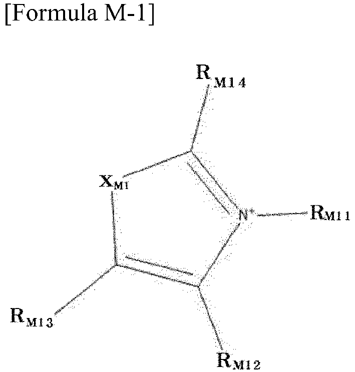

In Formula M-1 above, X_{M1} is -N(R_{M15})- or -S-, and R_{M11}, R_{M12}, R_{M13}, R_{M14} and R_{M15} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, R_{M11}, R_{M12}, R_{M13}, R_{M14} and R_{M15} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, R_{M11}, R_{M12}, R_{M13}, R_{M14} and R_{M15} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, a methoxy group, or an ethoxy group.

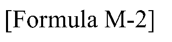

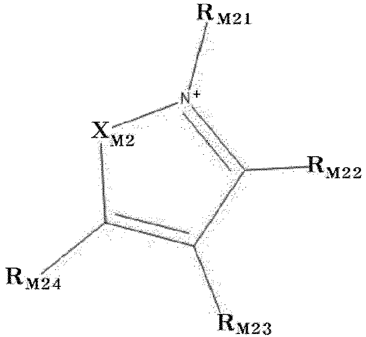

In Formula M-2, X_{M2} is -N(R_{M25})- or -S-. Specifically, R_{M21}, R_{M22}, R_{M23}, R_{M24} and R_{M25} may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 2 to 12 carbon atoms. Specifically, R_{M21}, R_{M22}, R_{M23}, R_{M24} and R_{M25} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, in Formula M-2 above, R_{M21}, R_{M22}, R_{M23}, R_{M24} and R_{M25} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group.

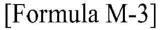

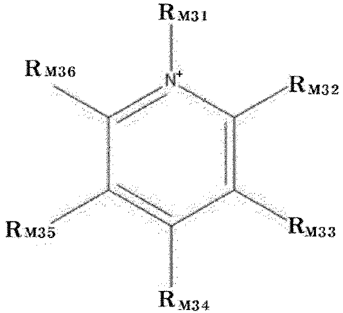

In Formula M-3 above, R_{M31}, R_{M32}, R_{M33}, R_{M34}, R_{M35} and R_{M36} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, R_{M31}, R_{M32}, R_{M33}, R_{M34}, R_{M35} and R_{M36} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, R_{M31}, R_{M32}, R_{M33}, R_{M34}, R_{M35} and R_{M36} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group.

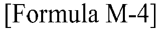

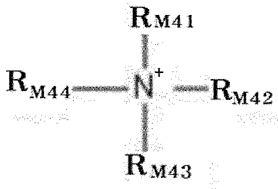

In Formula M-4 above, R_{M41}, R_{M42}, R_{M43} and R_{M44} may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, R_{M41}, R_{M42}, R_{M43} and R_{M44} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, R_{M41}, R_{M42}, R_{M43} and R_{M44} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of R_{M41}, R_{M42}, R_{M43} and R_{M44} may be bonded to each other to form an aliphatic ring, and specifically, at least two of R_{M41}, R_{M42}, R_{M43} and R_{M44} are an alkyl group having 1 to 5 carbon atoms or an alkyl group having 2 to 3 carbon atoms, and these may be bonded to each other to form an aliphatic hydrocarbon ring.

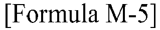

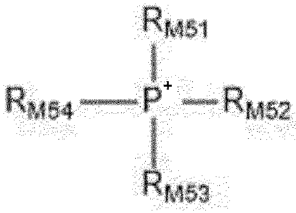

In Formula M-5 above, R_{M51}, R_{M52}, R_{M53} and R_{M54} may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, R_{M51}, R_{M52}, R_{M53} and R_{M54} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, R_{M51}, R_{M52}, R_{M53} and R_{M54} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of R_{M51}, R_{M52}, R_{M53} and R_{M54} may be bonded to each other to form an aliphatic ring, and specifically, at least two of R_{M51}, R_{M52}, R_{M53} and R_{M54} are an alkyl group having 1 to 5 carbon atoms or an alkyl group having 2 to 3 carbon atoms, and these may be bonded to each other to form an aliphatic hydrocarbon ring.

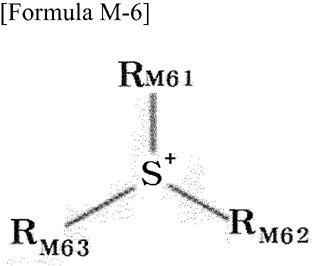

In Formula M-6 above, R_{M61}, R_{M62} and R_{M63} may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, R_{M61}, R_{M62} and R_{M63} may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, R_{M61}, R_{M62} and R_{M63} may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-CH₂CH=CH₂), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of R_{M61}, R_{M62} and R_{M63} may be bonded to each other to form an aliphatic ring, and specifically, at least two of R_{M61}, R_{M62} and R_{M63} are an alkyl group having 1 to 5 carbon atoms or an alkyl group having 2 to 3 carbon atoms, and these may be bonded to each other to form an aliphatic hydrocarbon ring.

Here, in Formula M-1 to Formula M-6 above, an alkoxyalkyl group having 2 to 10 carbon atoms may be represented as, for example, Rⱼ₂-O-Rⱼ₁-* (wherein * is a bonding site). Here, Rⱼ₁ and Rⱼ₂ may each independently be an alkyl group having 1 to 5 carbon atoms, and specifically may each independently be a methyl group, an ethyl group, a propyl group, a butyl group, or a pentyl group.

Here, in Formula M-1 to Formula M-6 above, an alkoxyalkyl group having 2 to 10 carbon atoms may be represented as, for example, Rⱼ₂-O-Rⱼ₁-* (wherein * is a bonding site). Here, Rⱼ₁ and Rⱼ₂ may each independently be an alkyl group having 1 to 5 carbon atoms, and specifically may each independently be a methyl group, an ethyl group, a propyl group, a butyl group, or a pentyl group.

For example, the compound represented by Formula M-1 above includes at least one compound selected from the group consisting of compounds represented by Formula M-1-1 to Formula M-1-10 below.

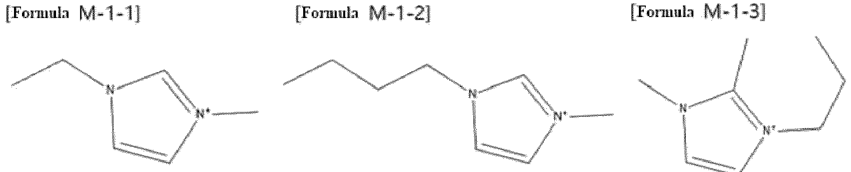

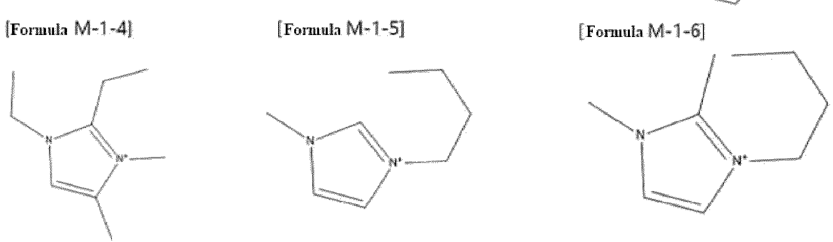

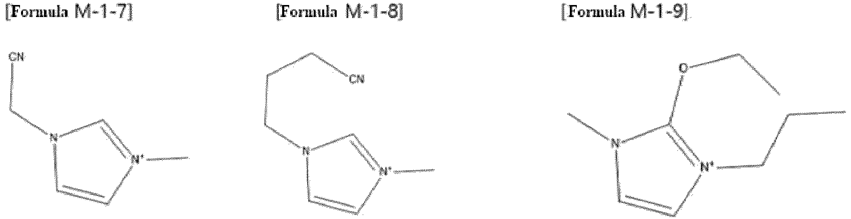

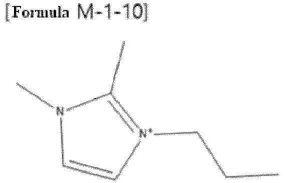

The compound represented by Formula M-2 above may be at least one compound selected from the group consisting of compounds represented by Formula M-2-1 to Formula M-2-3 below.

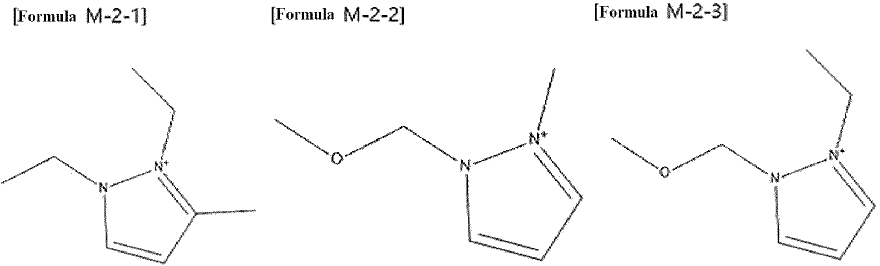

The compound represented by Formula M-3 above may be at least one compound selected from the group consisting of compounds represented by Formula M-3-1 to Formula M-3-6 below.

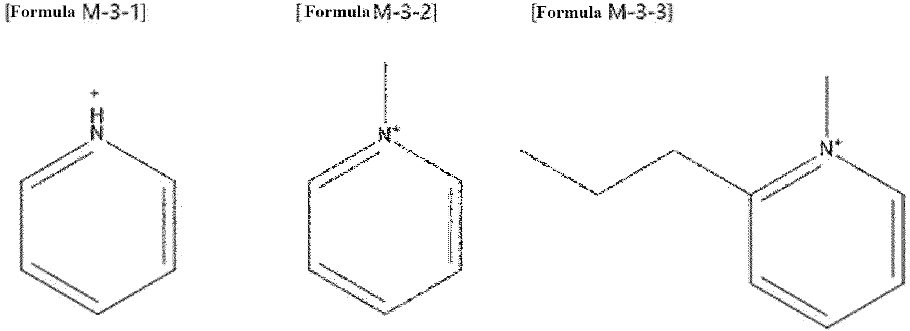

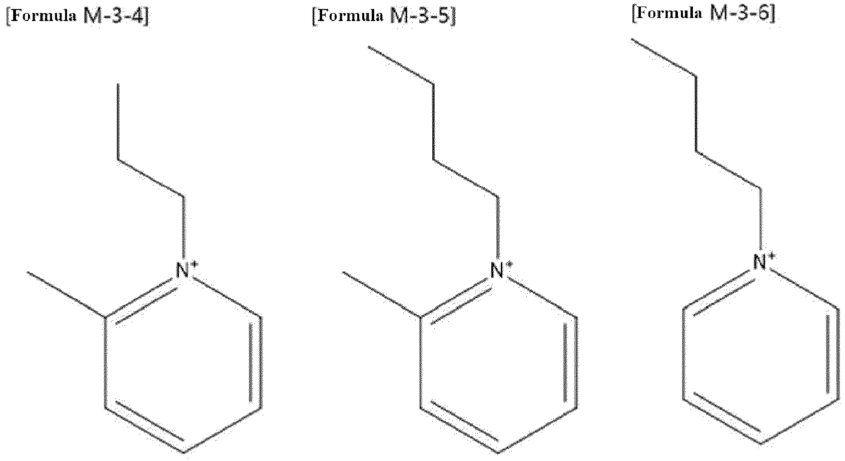

The compound represented by Formula M-4 above may be at least one compound selected from the group consisting of compounds represented by Formula M-4-1 to Formula M-4-17 below.

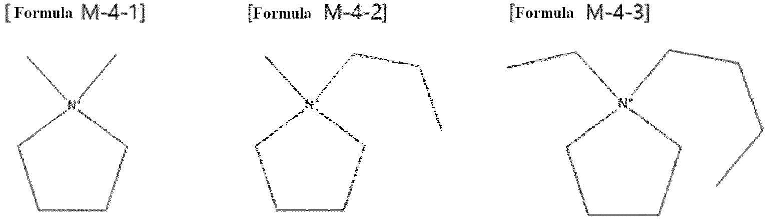

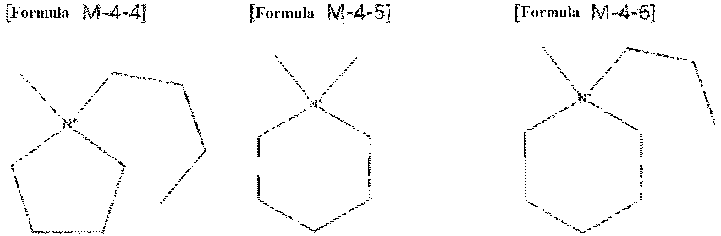

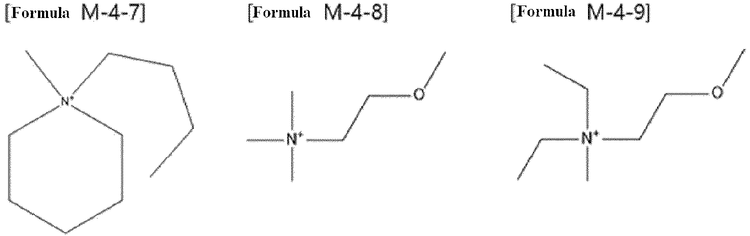

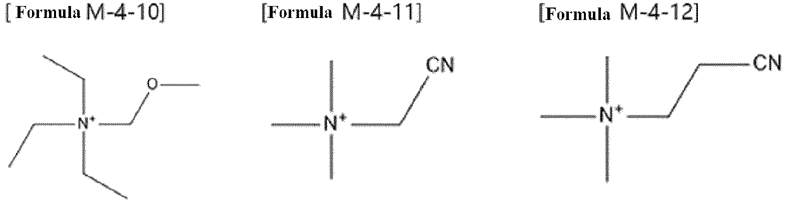

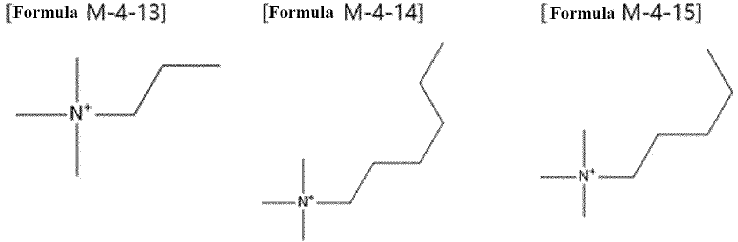

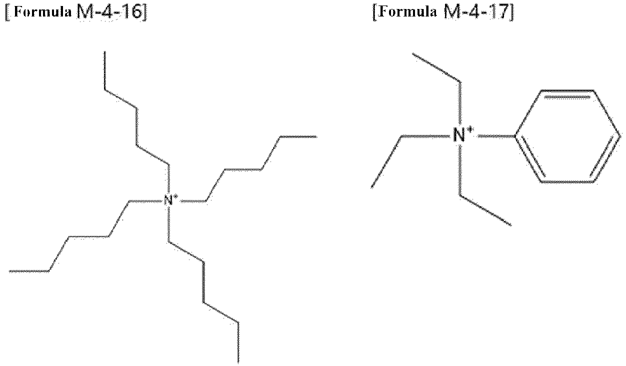

The compound represented by Formula M-5 above may be at least one compound selected from the group consisting of compounds represented by Formula M-5-1 to Formula M-5-14 below.

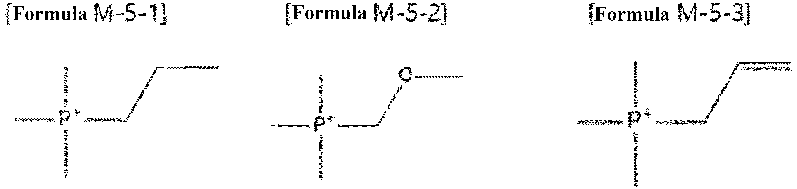

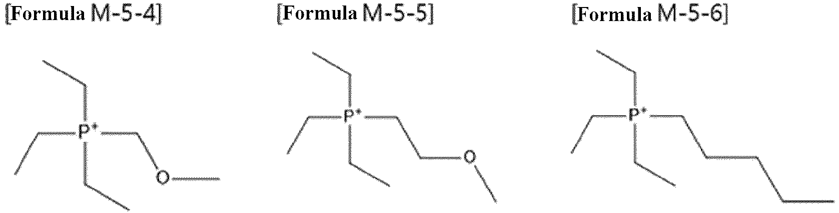

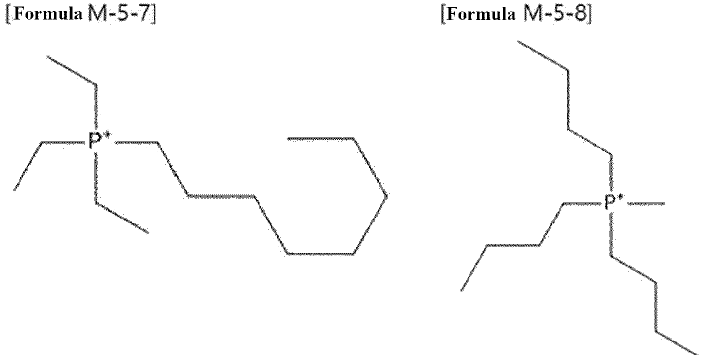

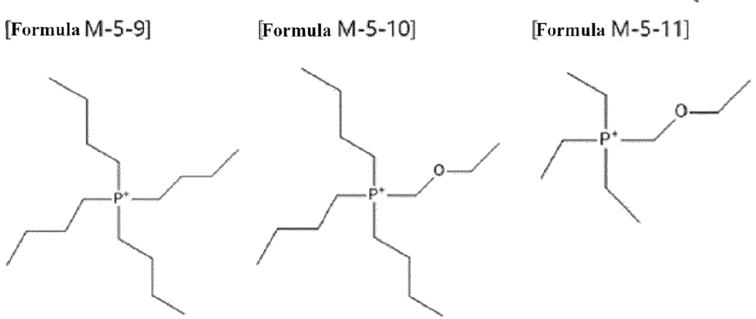

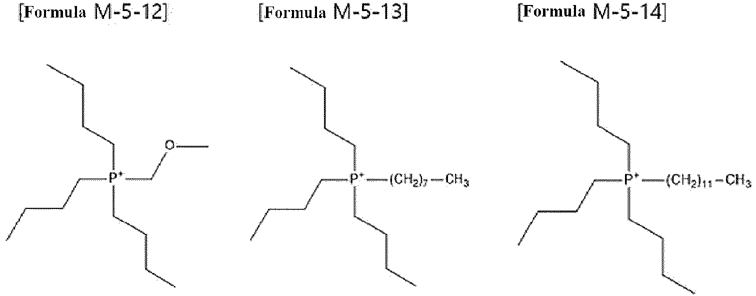

The compound represented by Formula M-6 above may be at least one compound selected from the group consisting of compounds represented by Formula M-6-1 to Formula M-6-11 below.

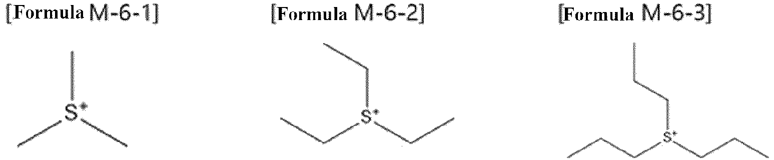

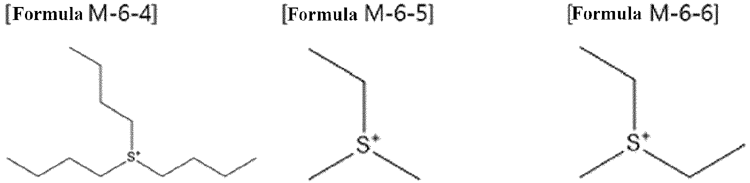

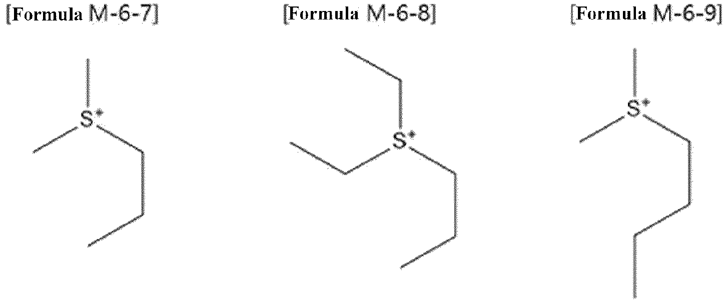

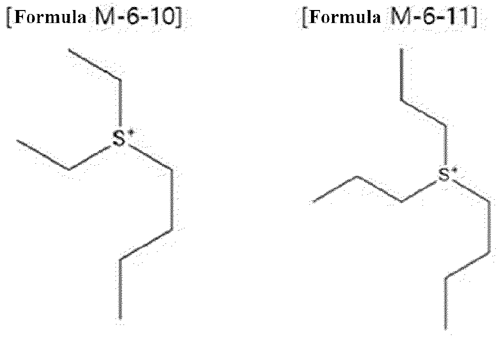

In Formula 1 above, a is the valence of M when M is a metal cation. For example, a is 1 for Li, which is an alkali metal, and a is 2 for Ca, which is an alkaline earth metal. When M is an organic cation, a is 1. In Formula 1 above, a=b.

For example, the compound represented by Formula 1 may include a compound represented by Formula 1-1 below.

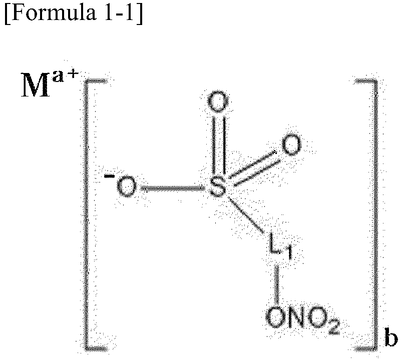

In Formula 1-1 above, each of M, a, b and L₁ is as defined in Formula 1 above.

In Formula 1 above, L₁ may be an alkyleneoxy group having 1 to 5 carbon atoms. For example, L₁ may be -O-R_{L1}-, and R_{L1} may be an alkylene group with having 1 to 5 carbon atoms. Here, when L₁ may be an alkyleneoxy group (e.g., -O-R_{L1}-), oxygen (O) may be bonded to sulfur (S). L₁ may specifically be an alkyleneoxy group having 2 to 3 carbon atoms, more specifically may be an ethyleneoxy group or a propyleneoxy group, and even more specifically may be an ethyleneoxy group.

Specifically, the compound represented by Formula 1 above may include a compound represented by Formula 1-A below.

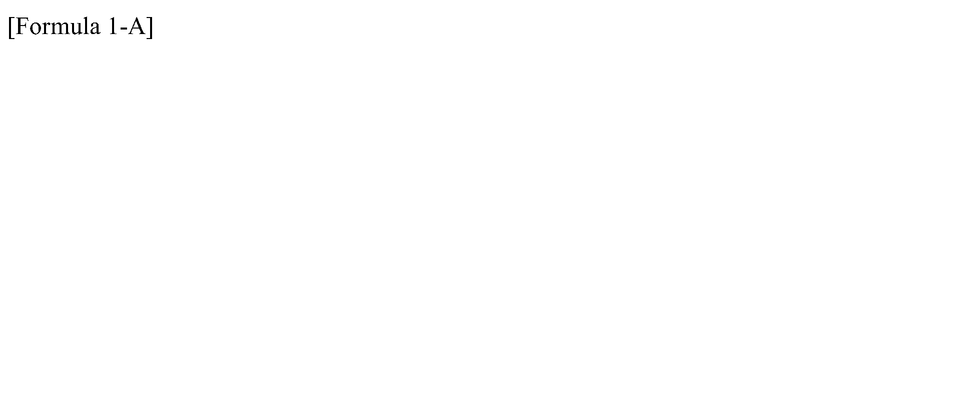

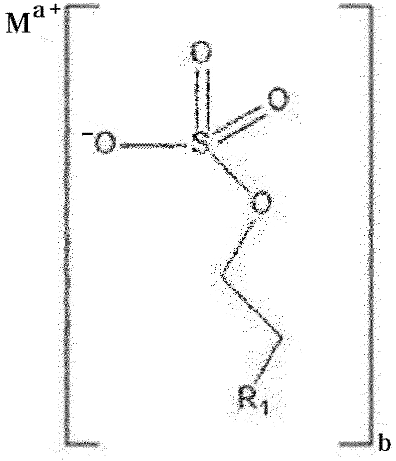

In Formula 1-A above, each of M, a, b and R₁ is as defined in Formula 1 above.

Specifically, the compound represented by Formula 1 above may include a compound represented by Formula 1-A-1 below.

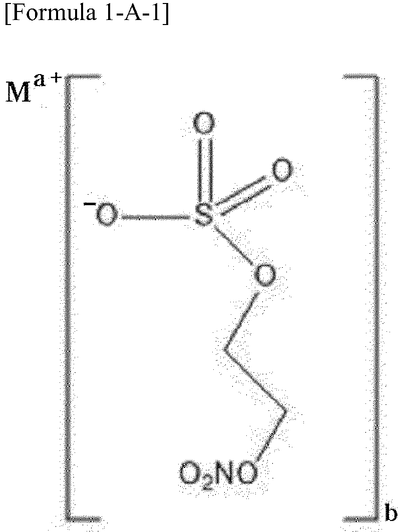

In Formula 1-A-1, each of M, a, and b is as defined in Formula 1 above.

Even more specifically, the compound represented by Formula 1 above may include a compound represented by Formula 1-a-1 below.

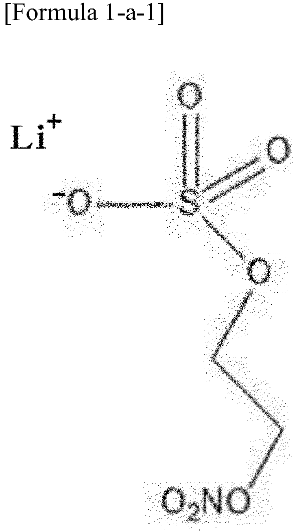

The compound represented by Formula 1 can be formed, for example, by reacting a sulfate oxide (e.g., a cyclic sulfate oxide containing a sulfate group (-OS(=O)₂-O-) in the ring) with a metal nitrate (e.g., lithium nitrate, lithium nitrite, etc.), but is not particularly limited thereto. Such a reaction may be performed in advance before the production of the non-aqueous electrolyte, or may be performed by adding the above-described sulfur oxide and metal nitrate to the organic solvent in the production process of the non-aqueous electrolyte.

The presence or absence of the compound represented by Formula 1 can be confirmed by HR-LS/MS(High Resolution Liquid Chromatography-Mass Spectrometry) and/or ¹H-NMR(¹H-Nuclear Magnetic Resonance Spectroscopy), but is not particularly limited thereto.

Meanwhile, the first additive and the second additive may be included in a weight ratio of 1 : 0.05 to 20, 1 : 0.1 to 10, 1 : 0.5 to 5 , or 1:0.5 to 1:3. When the content ratio of the first additive and the second additive satisfies the above range, a film in which components derived from each additive are uniformly distributed may be formed, thereby minimizing an increase in resistance caused by unnecessary film formation. As a result, lithium ion conductivity is significantly improved, and a film having excellent durability can be formed.

### (3-3) Third Additive

In addition, the non-aqueous electrolyte of the present disclosure may include a third additive, wherein the third additive may further include at least one of ethylene sulfate and 1,3-propane sultone. Ethylene sulfate and/or 1,3-propane sultone may be applied as an auxiliary additive for the formation of a sulfur (S) containing SEI film.

The total content of ethylene sulfate and 1,3-propane sultone is 0.1 wt% to 2.0 wt% based on the total weight of the non-aqueous electrolyte. When the total content of ethylene sulfate and 1,3-propane sultone satisfies the above numerical range, this may improve the film-forming effect, thereby reducing the degradation of life and/or storage performance, and preventing an increase in battery resistance caused by thickened electrode films. Furthermore, this can prevent adverse effects on charge-transfer phenomena such as polarization, suppress the generation of gaseous byproducts at the site, where the positive electrode and the negative electrode face each other, which enhances lithium-ion diffusion, and prevent lithium metal electrodeposition, thereby reducing irreversible capacity loss.

In the present disclosure, the total content of ethylene sulfate and 1,3-propane sultone may refer, for example, to the total content of 1,3-propane sulton in the non-aqueous electrolyte when the non-aqueous electrolyte does not include ethylene sulfate, and may refer to the total content of ethylene sulfate in the non-aqueous electrolyte when the non-aqueous electrolyte does not include 1,3-propane sultone.

Specifically, the total content of ethylene sulfate, and 1,3-propane sultone may be 0.1 wt% to 2.0 wt%, may be 0.3 wt% to 1.7 wt%, and may be 0.5 wt% to 1.5 wt% based on the total weight of the non-aqueous electrolyte. When the content is within the above-described range, the uniformity of the electrode film is not only improved, and stable battery performance such as smooth diffusion of lithium ions can be achieved.

### (3-4) Auxiliary additives

In addition, in order to prevent an electrolyte from being decomposed to cause collapse of a negative electrode in a high output environment, or further improve low-temperature high-rate discharge characteristics, high-temperature stability, overcharge protection, and a battery swelling suppression effect at high temperatures, the additive may further include auxiliary additives in the above electrolyte, if necessary. When the auxiliary additive is included, the auxiliary additive may be referred to as a fourth additive.

The auxiliary additive may include at least one selected from a nitrate-based compound, a cyclic carbonate-based compound, a nitrile-based compound, a benzene-based compound, a lithium salt-based compound, an amine-based compound, and a silane-based compound.

The nitrate-based compound may include lithium nitrate (LiNO₃).

The cyclic carbonate-based compound may be at least one selected from vinylene carbonate (VC) and vinyl ethylene carbonate (VEC).

The benzene-based compound may be fluorobenzene. The amine-based compound may be at least one selected from triethanolamine and ethylenediamine. The silane-based compound may be at least one selected from tetravinylsilane, tris(trimethylsilyl) phosphate (TMSPa), and tris(trimethylsilyl)phosphite (TMSPi).

The lithium salt-based compound may be at least one selected from lithium bis-(oxalato)borate (LiBOB) and lithium difluorooxalatoborate (LiODFB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

Specifically, the auxiliary additive may include at least one selected from vinylene carbonate and fluoroethylene carbonate, and specifically, may include vinylene carbonate and fluoroethylene carbonate.

Meanwhile, two or more types of the auxiliary additives may be mixed and used, and may be contained in an amount of less than 10 wt%, specifically, 0.01 wt% or more and less than 8.0 wt%, more specifically, 0.05 wt% to 5.0 wt%, and even more specifically, 3 wt% to 5 wt%, based on the total weight of the non-aqueous electrolyte.

### Lithium secondary battery

In addition, the present disclosure provides a lithium secondary battery comprising the above-mentioned non-aqueous electrolyte.

Specifically, the lithium secondary battery according to the present disclosure includes a positive electrode, a negative electrode facing the positive electrode, a separator disposed between the negative electrode and the positive electrode, and the above-described non-aqueous electrolyte. The non-aqueous electrolyte may be the non-aqueous electrolyte described above.

After an electrode assembly, in which the positive electrode, the negative electrode facing the positive electrode, and separator interposed between the positive electrode and the negative electrode are included, is accommodated in a battery case, the lithium secondary battery may be prepared by injecting the non-aqueous electrolyte thereto.

Since the non-aqueous electrolyte has been described above, the negative electrode, positive electrode, and separator will be described below.

### (1) Positive Electrode

The positive electrode may include a positive electrode active material.

The positive electrode active material is a compound capable of reversibly intercalation and deintercalation, is not particularly limited as long as it is a positive electrode active material used in the art, and specifically may include a lithium metal composite oxide. More specifically, the lithium metal composite oxide may be a layered compound such as lithium cobalt oxide (LiCoO₂), lithium nickel oxide (LiNiO₂), or a compound substituted with one or more transition metals; a lithium iron oxide such as LiFe₃O₄;a lithium iron phosphate such as LiFePO₄; a lithium manganese oxide such as Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni-site type lithium nickel oxide represented by LiNi_{1-c2}M_{c2}O₂ (wherein M is at least any one selected from the group consisting of Co, Mn, Al, Cu, Fe, Mg, B and Ga, and satisfies 0.01≤c2≤0.3); a lithium manganese composite oxide represented by LiMn_{2-c3}M_{c3}O₂ (wherein M is at least any one selected from the group consisting of Co, Ni, Fe, Cr, Zn and Ta, and satisfies 0.01≤c3≤0.1) or Li₂Mn₃MO₈ (wherein M is at least any one selected from the group consisting of Fe, Co, Ni, Cu and Zn.), etc., but is not limited thereto. The positive electrode may be a Li-metal positive electrode.

Even more specifically, the positive electrode active material may include lithium iron phosphate.

The lithium iron phosphate may include a compound represented by Formula P-1 below.

[Formula P-1] Li₁₊ₑFe_{1-g}M²_{g}(PO_{4-f})X_{f}

In Formula P-1 above, M² is one or more elements selected from Co, Ni, Mn, Al, Mg, Ti and V, X is F, S, or N, and 0≤g≤0.5; -0.5≤e≤+0.5; 0≤f≤0.1.

Specifically, the compound represented by Formula P-1 may typically include LiFePO₄ (LFP) (g=0, e=0, and f=0), LiMn_{0.5}Fe_{0.5}PO₄ (g=0.5, e=0, and f=0) and LiMn_{0.6}Fe_{0.4}PO₄ (g=0.4, e=0, and f=0).

For the lithium iron phosphate, primary particles having a nanometer size may be used for high input/output of lithium ions, or these primary particles may be granulated and used as secondary particles that are an aggregate thereof. For example, when primary particles are used as the lithium iron phosphate, the particle size may be 50 nm to 2000 nm, and more specifically 200 nm to 1100 nm. In addition, when these primary particles are assembled to form secondary particles that are an aggregate thereof and used, the average particle diameter (D₅₀) of the secondary particles may be from 0.5 µm to 30 µm.

Meanwhile, the lithium iron phosphate may be an amorphous layer having a surface coated with carbon or a metal oxide. In this case, since the amorphous layer of carbon or metal oxide coated on the surface is non-crystalline, lithium ions are intercalated and deintercalated into and from the lithium iron phosphate in the core portion through the amorphous layer of the shell. The amorphous layer of carbon or metal oxide coated on the surface exhibits excellent electron conductivity while passing through lithium ions, and can also serve as a conduction path to the lithium iron phosphate core, which is the active material, to enable charging and discharging at a high rate. In addition, when the surface of the lithium iron phosphate is coated with the amorphous layer of the carbon or the metal oxide, this may further increase safety in terms of controlling unnecessary reactions between the core material and the electrolyte.

Further, the present disclosure can further improve the electrical conductivity of the positive electrode by using a lithium nickel cobalt manganese oxide represented by Formula P-2 below, having extremely high electrical conductivity, together with the lithium iron phosphate.

The lithium nickel cobalt manganese oxide may be represented by Formula P-2 below.

[Formula P-2] Li₁₊ₓ(NiₐCo_{b}Mn_{c}M_{d})O₂

In Formula P-2 above, M is one or more selected from W, Cu, Fe, V, Cr, Ti, Zr, Zn, Al, In, Ta, Y, La, Sr, Ga, Sc, Gd, Sm, Ca, Ce, Nb, Mg, B and Mo , and 1+x, a, b, c and d are each independent atomic fractions of elements, wherein 0≤x≤0.2, 0.50≤a<1, 0<b≤0.25, 0<c≤0.25, 0≤d≤0.1, a+b+c+d=1. Preferably, a, b, c and d may be 0.70≤a≤0.95, 0.025≤b≤0.20, 0.025≤c≤0.20, and 0≤d≤0.05, respectively. Preferably, a, b, c and d may be 0.80≤a≤0.95, 0.025≤b≤0.15, 0.025≤c≤0.15, and 0≤d≤0.05, respectively. Preferably, a, b, c and d may be 0.85≤a≤0.90, 0.05≤b≤0.10, 0.05≤c≤0.10, and 0≤d≤0.03, respectively.

Such a lithium nickel cobalt manganese oxide may be any one selected from Li(Ni_{0.6}Mn_{0.2}Co_{0.2})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂ and Li(Ni_{0.90}Mn_{0.05}Co_{0.05})O₂.

The lithium iron phosphate and the lithium nickel cobalt manganese oxide may be included in a weight ratio of 70:30 to 80:20, and specifically may be included in a weight ratio of 70:30 to 50:50.

When the mixing ratio of the lithium iron phosphate and the lithium nickel cobalt manganese oxide satisfies the above range, this can further improve electrical conductivity, while ensuring battery safety under high-temperature and high-voltage conditions.

Specifically, when the content ratio of the lithium iron phosphate to the lithium nickel cobalt manganese oxide is less than 80 weight ratio, this can ensure excellent capacity characteristics and electrical conductivity, and when the content ratio of the lithium iron phosphate to the lithium nickel cobalt manganese oxide is 70 weight ratio or more, this can ensure high-temperature and high-voltage stability.

In addition, the positive electrode active material may include a per-lithium manganese-rich oxide.

The per-lithium manganese-rich oxide may include a compound represented by Formula P-3 below.

[Formula P-3] Li₁₊ₛ[NiₜCoᵤMnᵥM¹_{w}]O_{2+z}

In Formula P-3 above, M¹ is one or more selected from W, Cu, Fe, V, Cr, Ti, Zr, Zn, Al, In, Ta, Y, La, Sr, Ga, Sc, Gd, Sm, Ca, Ce, Nb, Mg, B and Mo, wherein 0.05≤s≤1, 0≤t≤0.5, 0≤u≤0.3, 0.5≤v<1.0, 0≤w≤0.2, 0≤z≤1. Preferably, in Formula B above, it may be 0.05≤s≤1.0, 0.1≤t≤0.5, 0≤u≤0.1, 0.5≤v<1.0, 0≤w≤0.2, 0≤z≤1. More preferably, in Formula P-2 above, it may be 0.10≤s≤0.50, 0.1≤t≤0.5, 0≤u≤0.1, 0.6≤v<1.0, 0≤w≤0.1, 0≤z≤0.50.

The positive electrode active material may be in a particle form. Specifically, the average particle diameter (D₅₀) of the positive electrode active material may be in the range of 1µm to 30 µm.

The positive electrode active material may be included in an amount of 70 wt% to 99 wt%, specifically 80 wt% to 98 wt% in the positive electrode active material layer in consideration of enhancing its capacity.

The positive electrode may include a positive electrode current collector and a positive electrode active material layer disposed on at least one surface of the positive electrode current collector. Here, the positive electrode active material layer may include the above-described positive electrode active material.

The positive electrode current collector generally has a thickness of 3 to 500 µm.

Microscopic irregularities may be formed on the surface of the positive electrode current collector to improve the adhesion of the positive electrode active material. For example, the positive electrode current collector may be used in various shapes such as a film, a sheet, a foil, a net, a porous body, a foam body, a non-woven fabric body, and the like.

The positive electrode active material layer may be disposed on at least one surface of the positive electrode current collector. Specifically, the positive electrode active material layer may be disposed on one or both surfaces of the positive electrode current collector.

The positive electrode active material may be included in an amount of 80 wt% to 99 wt% in the positive electrode active material layer in consideration of the sufficient capacity of the positive electrode active material.

The positive electrode active material layer may further include a binder and/or a conductive agent together with the above-described positive electrode active material.

The binder improves the adhesion between the positive electrode active material particles and the adhesion between the positive electrode active material and a current collector. As an example of the binder, any one of a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxy methyl cellulose (CMC), starch, hydroxy propyl cellulose, or regenerated cellulose; a polyalcohol-based binder including polyvinyl alcohol; a polyolefin-based binder including polyethylene or polypropylene; a polyimidazole-based binder; a polyester-based binder; and a silane-based binder or a mixture of two or more thereof may be used. Preferably, polyvinylidene fluoride may be included.

The positive electrode active material may be included in an amount of 1 wt % to 20 wt %, preferably 1.2 wt% to 10 wt% in the positive electrode active material layer in terms of sufficiently securing a cohesive force between components such as the positive electrode active material.

The conductive agent can be used to assist and improve the conductivity of the secondary battery, and is not particularly limited as long as it has conductivity without causing chemical changes. Specifically, the positive electrode conductive material may include at least one selected from graphite such as natural graphite or artificial graphite; acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon nanotubes in terms of improving conductivity.

The conductive material may be included in an amount of 1 wt% to 20 wt%, preferably 1.2 wt% to 10 wt% in the positive electrode active material layer in terms of sufficiently securing electric conductivity.

The positive electrode active material layer may have a thickness of 5 µm to 500 µm, preferably 20 µm to 200 µm.

The positive electrode may be manufactured by coating the positive electrode current collector with a positive electrode slurry including a positive electrode active material and selectively a binder, a conductive material and a solvent for forming a positive electrode slurry, and then drying and rolling. Alternatively, after a film is prepared by mixing the positive electrode active material and optionally a binder, a conductive material, etc., the film is then laminated on the positive electrode current collector to prepare a positive electrode.

The solvent for forming a positive electrode slurry may include, for example, at least one selected from distilled water, N-methyl pyrrolidone, ethanol, methanol, and isopropyl alcohol, preferably N-methyl pyrrolidone, for the purpose of facilitating the dispersion of the positive electrode active material, the binder and/or the conductive material.

Meanwhile, in the present disclosure, the loading amount of the positive electrode including the lithium iron phosphate may be 0.032 g/cm² or more (the loading amount of the positive electrode based on each side: 0.016 g/cm² or more), specifically 0.032 g/cm² to 0.060 g/cm², and more preferably 0.040 g/cm² to 0.060 g/cm². When the loading amount of the positive electrode active material satisfies the above range, a battery design with high energy density is possible.

### (2) Negative Electrode

Next, a negative electrode will be described.

The negative electrode may include a negative electrode active material.

The negative electrode active material is a compound capable of reversibly intercalating and deintercalating lithium ions, and may include at least one selected from the group consisting of a carbon-based active material, a (semi) metallic active material, and a lithium metal, and specifically may include at least one selected from a carbon-based active material and a (semi) metallic active material. More specifically, the negative electrode active material may include at least one selected from a carbon-based active material and a silicon-based active material.

The carbon-based active material may include at least one selected from graphite, hard carbon, soft carbon, carbon black, graphene, and fibrous carbon, and preferably may include graphite. The graphite may be, for example, at least one of artificial graphite and natural graphite.

The average particle diameter (D₅₀) of the carbon-based active material may be in the range of 10 µm to 30 µm, and preferably 15 µm to 25 µm in terms of ensuring the structural stability during charging and discharging and reducing side reactions with an electrolyte solution.

Specifically, the (semi) metallic active material may include at least one selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; an alloy of lithium and at least one (semi) metal selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; an oxide of at least one (semi) metal selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; lithium titanium oxide(LTO); lithium vanadium oxide; etc.

More specifically, the (semi) metallic active material may include a silicon-based active material.

The silicon-based active material may include at least one selected from the compound represented by SiOₓ(0≤x<2) and a silicon-carbon composite. In the case of SiO₂, since lithium cannot be stored because it does not react with lithium ions, and x is preferably within the above range. More preferably, the silicon-based active material may be SiO.

The average particle size (D₅₀) of the silicon-based active material may be 1*µ*m to 30*µ*m, preferably 2 *µ*m to 15 *µ*m in terms of ensuring the structural stability during charging and discharging and reducing side reactions with an electrolyte solution.

In addition, the negative electrode of the present disclosure may include at least one of the carbon-based active material and silicon-based active material.

Specifically, the negative electrode of the present disclosure may include the carbon-based active material and silicon-based active material.

Here, the weight ratio of the silicon-based negative electrode active material and the carbon-based negative electrode active material may be 1:99 to 30:70, and preferably 3:97 to 15:85. In a case in which the mixing ratio of the silicon-based active material to the carbon-based active material satisfies the above range, since the volume expansion of the silicon-based active material is suppressed while capacity characteristics are improved, excellent cycle performance may be secured.

The negative electrode may include a negative electrode current collector and a negative electrode active material layer disposed on at least one surface of the negative electrode current collector. The negative electrode active material may be included in the negative electrode active material layer.

The negative electrode current collector is not particularly limited so long as it has a high conductivity without causing adverse chemical changes in the battery. Specifically, copper, stainless steel, aluminum, nickel, titanium, fired carbon, copper or stainless steel that is surface-treated with one of carbon, nickel, titanium, silver, and the like, and an aluminum-cadmium alloy may be used as the negative electrode current collector.

The negative electrode current collector generally has a thickness of 3 to 500 µm.

Microscopic irregularities may be formed on the surface of the negative electrode collector to improve the adhesion of the negative electrode active material. For example, the negative electrode current collector may be used in various shapes such as a film, a sheet, a foil, a net, a porous body, a foam body, a non-woven fabric body, and the like.

The negative electrode active material layer may be disposed on at least one surface of the negative electrode current collector. Specifically, the negative electrode active material layer may be disposed on one or both surfaces of the negative electrode current collector.

The negative electrode active material may be included in an amount of 60 wt% to 99 wt% in the negative electrode active material layer in terms of exhibiting the sufficient capacity in the secondary battery while minimizing the impact of the volume expansion/contraction on the battery.

The negative electrode active material layer may further include a conductive material and/or a binder together with the above silicon-based active material.

The binder is used to improve adhesion between the negative electrode active material layer and the negative electrode current collector described below and enhance a cohesive force between the silicon-based active materials.

Specifically, in terms of further improving electrode adhesion and imparting sufficient resistance to volume expansion/contraction of silicon-based active materials, the binder may include at least one selected from styrene butadiene rubber (SBR), nitrile butadiene rubber (NBR), acrylonitrile butadiene rubber, acrylic rubber, butyl rubber, fluoro rubber, polyvinyl alcohol, carboxymethylcellulose (CMC), starch, hydroxypropylcellulose, regenerated cellulose, polyvinyl alcohol(PVA), polyacrylic acid (PAA), polyethylene glycol (PEG), polyacrylonitrile (PAN), polyacryl amide (PAM), polyvinylidene fluoride, polytetrafluoroethylene, and polyvinylidene fluoride-hexafluoropropylene.

The binder may be included in the negative electrode active material layer in an amount of 1 wt% to 30 wt%, and when it is included in the above range, the negative electrode active material can be better bound, thereby minimizing the problem of volume expansion of the active material, and concurrently during the preparation of a slurry for forming the negative electrode active material layer, it can facilitate the dispersion of the binder and improve the coating property and phase stability of the slurry.

The conductive agent can be used to assist and improve the conductivity of the secondary battery, and is not particularly limited as long as it has conductivity without causing chemical changes. Specifically, the conductive material may include at least one selected from the group consisting of graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluoro carbon; metallic powder such as aluminum, and nickel powder; conductive whiskers such as zinc oxide and potassium titanate; conductive metal oxide such as titanium oxide; polyphenylene derivatives, and the like.

The conductive material may be included in the negative electrode active material layer in an amount of 1 wt% to 20 wt%, and when the amount is within the above range, it is preferable in terms of forming an excellent conductive network while alleviating an increase in the resistance due to the binder.

The negative electrode active material layer may have a thickness of 5 µm to 500 µm, preferably 5 µm to 100 µm.

The negative electrode may be prepared by coating the negative electrode current collector with a negative electrode slurry including a negative electrode active material and selectively a binder, a conductive material and a solvent for forming a negative electrode slurry, and then drying and rolling. Alternatively, after a film is prepared by mixing the negative electrode active material and optionally a binder, a conductive material, etc., the film is then laminated on the negative electrode current collector to prepare a negative electrode.

The solvent for forming a negative electrode slurry may include, for example, at least one selected from distilled water, N-methyl pyrrolidone, ethanol, methanol, and isopropyl alcohol, preferably distilled water, for the purpose of facilitating the dispersion of the negative electrode active material, the binder and/or the conductive material.

### (3) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte due to low resistance to the ion transport of the non-aqueous electrolyte is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, an ethylene/methacrylate copolymer, etc., or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

A shape of the lithium secondary battery of the present invention is not particularly limited, but a cylindrical type, a prismatic type, a pouch type, or a coin type may be used.

In addition, the lithium secondary battery of the present disclosure may be suitably used in portable devices, such as mobile phones, notebook computers, and digital cameras, and electric cars such as hybrid electric vehicles (HEVs) and power storage devices (ESS).

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

### Examples and Comparative Examples

### Example 1

### (1) Preparation of a compound represented by Formula 1

Ethylene sulfate and LiNO₃ were dissolved in an ethyl acetate (EA) solvent at a ratio of 10 wt% to have an equivalent ratio of 1.2:1, and then mixed at room temperature (15-25°C) so that a reaction was carried out to form a compound represented by Formula 1-a-1. The compound represented by Formula 1, which was not dissolved in the ethyl acetate (EA) solvent precipitated in a powder form by the compound formation reaction. The solution after the reaction was filtered to obtain powder. Then, the ethyl acetate solvent remaining in the powder was evaporated and a compound represented by Formula 1-a-1 was then obtained.

The presence of the compound represented by Formula 1-a-1 was confirmed by HR-LC/MS(High Resolution Liquid Chromatography-Mass Spectrometry) and ¹H-NMR(¹H-Nuclear Magnetic Resonance Spectroscopy).

First, the compound represented by Formula 1-a-1 above (powder) was added to an organic solvent in which ethylene carbonate, ethylmethyl carbonate, and dimethyl carbonate were mixed at a volume ratio of 30:50:20, and the mixture was diluted with an acetone D6 solvent to prepare a sample solution. HR-LC/MS and ¹H-NMR were measured by using the sample solution.

For the HR-LC/MS equipment, Orbitrap IQ-X Tribrid by ThermoFisher was used. As the measurement conditions, CapcellPak C18 was used as a column, acetonitrile and trifluoroacetate (volume ratio 100 : 0.02) were used as an eluent A, distilled water and trifluoroacetate (volume ratio 100 : 0.02) were used as an eluent B; a flow rate was 1mL/min; a UV detector was set at 220 nm, and an electrospray ionization (ESI) anionization mode was used as an ionization mode. For the ¹H-NMR equipment, Advance Neo by Bruker was used.

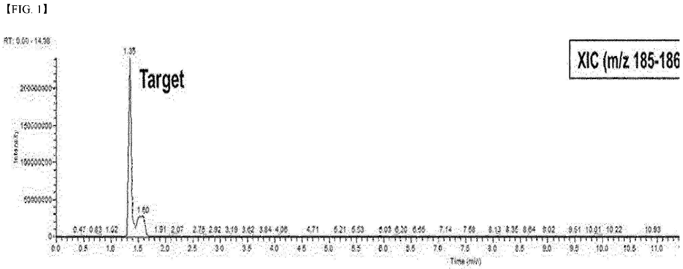

The presence of the compound represented by Formula 1-a-1 was confirmed through Figs. 1 to 4. Specifically, the XIC (Extracted Ion Chromatogram) for m/z 185.97140 according to FIG. 1 showed a single peak at 1.35 min, confirming that the compound represented by Formula 1-a-1 was present in the sample and was separated on the LC.

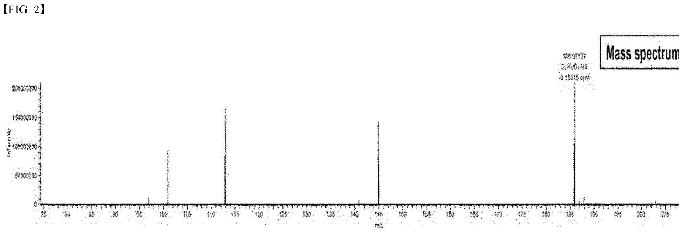

In the MS spectrum according to FIG. 2, 185.97140 corresponding to the anion of the compound represented by Formula 1-a-1 was observed, which matched the molecular formula C₂H₄NO₇S⁻ of the compound represented by Formula 1-a-1.

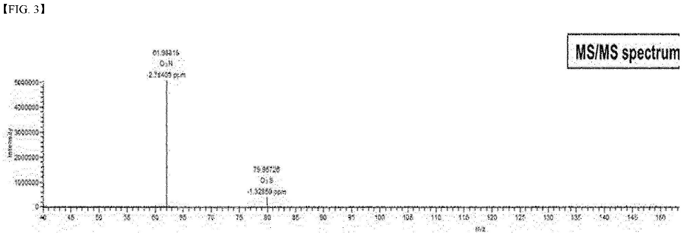

Additional MS/MS analysis (Tandem MS, double mass spectrometry) according to FIG. 3 detected fragment ions such as m/z 61.98818(O₃N), and 79.95725(O₃S), which are consistent with the expected structural decomposition pattern. These results support the presence and structural identity of the compound represented by Formula 1-a-1.

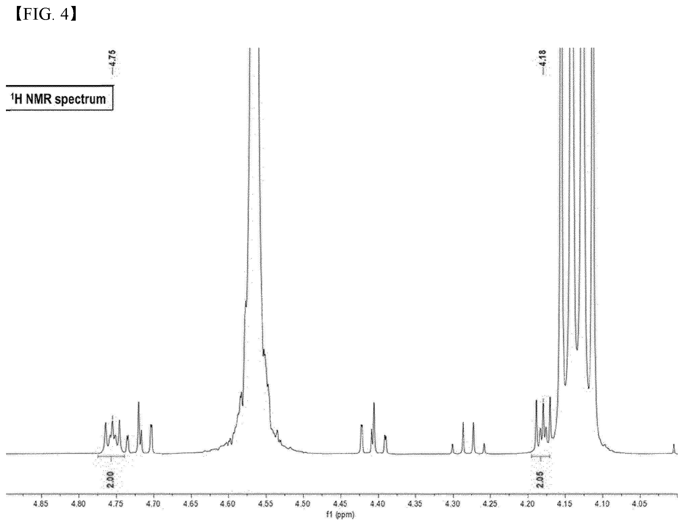

The observed characteristic chemical shifts of 4.76 (t, 2) and 4.18 (t, 2) in the ¹H-NMR spectrum according to FIG. 4 support the presence of the compound represented by Formula 1-a-1.

### (2) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and lithium difluorophosphate, a compound represented by Formula 1-a-1 above, 1,3-propane sultone (PS), vinylene carbonate (VC), and fluoroethylene carbonate (FEC) were added as additives to prepare a non-aqueous electrolyte. Lithium difluorophosphate, the compound represented by Formula 1-a-1, 1,3-propane sultone (PS), vinylene carbonate (VC), and fluoroethylene carbonate (FEC) were included in an amount of 0.5 wt%, 0.5 wt%, 0.5 wt%, 3 wt% and 1 wt%, respectively in the non-aqueous electrolyte.

### (3) Preparation of a lithium secondary battery

A positive electrode active material (LiFePO₄), a conductive material (Carbon Nanotube, CNT) and a binder (polytetrafluoroethylene, PTFE) were kneaded at a weight ratio of 96.0: 0.5: 3.5 to prepare a positive electrode active material slurry (solid content 100 wt%). A 13 µm thick positive electrode collector (Al thin film) was coated with the positive electrode active material slurry, dried, and roll-pressed to prepare a positive electrode. The loading amount of the positive electrode is 0.040 g/cm² (the loading amount of the positive electrode based on each side: 0.020 g/cm²).

A negative electrode active material (a mixture of artificial graphite and natural graphite in a weight ratio of 80:20), styrene-butadiene rubber and carboxymethyl cellulose as binders, and carbon black as a conductive material was added to distilled water, which was a solvent, in a weight ratio of 96.7: 2.8: 0.5 to obtain a negative electrode active material slurry (solid content: 53 wt%). A 6 µm thick negative electrode collector (Cu thin film) was coated with the negative electrode active material slurry, dried, and roll-pressed to prepare a negative electrode.

After an electrode assembly was prepared by a conventional method of sequentially stacking a polyethylene porous film with the positive electrode and negative electrode prepared above, the electrode assembly was put in a secondary battery case, and the above-prepared non-aqueous electrolytes was injected thereinto to prepare a lithium secondary battery.

### Example 2

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and lithium difluorophosphate, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. Lithium difluorophosphate, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.25 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 3

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and lithium difluorophosphate, a compound represented by Formula 1-a-1 prepared in Example 1 above, vinylene carbonate (VC), and fluoroethylene carbonate (FEC) were added as additives to prepare a non-aqueous electrolyte. Lithium difluorophosphate, the compound represented by Formula 1-a-1, vinylene carbonate (VC), and fluoroethylene carbonate (FEC) were included in an amount of 0.5 wt%,1 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 4

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 2A, a compound represented by Formula 1-a-1 prepared in Example 1 above, 1,3-propane sultone (PS), vinylene carbonate (VC), and fluoroethylene carbonate (FEC) were added as additives to prepare a non-aqueous electrolyte. The compound represented by Formula 2A, the compound represented by Formula 1-a-1, 1,3-propane sultone (PS), vinylene carbonate (VC), and fluoroethylene carbonate (FEC) were included in an amount of 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 5

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 2A, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. The compound represented by Formula 2A, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.25 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 6

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 2A, a compound represented by Formula 1-a-1 prepared in Example 1 above, vinylene carbonate (VC), and fluoroethylene carbonate (FEC) were added as additives to prepare a non-aqueous electrolyte. The compound represented by Formula 2A, the compound represented by Formula 1-a-1, vinylene carbonate (VC), and fluoroethylene carbonate (FEC) were included in an amount of 0.5 wt%, 1 wt%, 3 wt%, and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 7

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 3A, a compound represented by Formula 1-a-1 prepared in Example 1 above, 1,3-propane sultone (PS), vinylene carbonate (VC), and fluoroethylene carbonate (FEC) were added as additives to prepare a non-aqueous electrolyte. The compound represented by Formula 3A, the compound represented by Formula 1-a-1, 1,3-propane sultone (PS), vinylene carbonate (VC), and fluoroethylene carbonate (FEC) were included in an amount of 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 8

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 3A, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. The compound represented by Formula 3A, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.25 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Example 9

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 3A, a compound represented by Formula 1-a-1 prepared in Example 1 above, vinylene carbonate (VC), and fluoroethylene carbonate (FEC) were added as additives to prepare a non-aqueous electrolyte. The compound represented by Formula 3A, the compound represented by Formula 1-a-1, vinylene carbonate (VC), and fluoroethylene carbonate (FEC) were included in an amount of 0.5 wt%, 1 wt%, 3 wt%, and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 1

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and vinylene carbonate (VC), fluoroethylene carbonate (FEC) and 1,3-propane sultone (PS) were added as additives to prepare a non-aqueous electrolyte. Vinylene carbonate (VC), fluoroethylene carbonate (FEC) and 1,3-propane sultone (PS) were included in an amount of 3 wt%,1 wt% and 0.5 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 2

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and LiNO₃, vinylene carbonate (VC), and fluoroethylene carbonate (FEC) were added as additives to prepare a non-aqueous electrolyte. LiNO₃, vinylene carbonate (VC), and fluoroethylene carbonate (FEC) were included in an amount of 0.25 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 3

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and lithium difluorophosphate, ethylene sulfate (ESa), vinylene carbonate (VC), and fluoroethylene carbonate (FEC) were added as additives to prepare a non-aqueous electrolyte. Lithium difluorophosphate, ethylene sulfate (Esa), vinylene carbonate (VC), and fluoroethylene carbonate (FEC) were included in an amount of 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 4

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. The compound represented by Formula 1-a-1 above, ethylene sulfate (Esa), 1,3-propane sultone (PS), vinylene carbonate (VC), and fluoroethylene carbonate (FEC) were included in an amount of 0.5 wt%, 0.5 wt%, 0.5 wt%, 3 wt% and 1 wt%, respectively.

### (2) Preparation of a lithium secondary battery

A lithium secondary battery was prepared in the same manner as in Example 1 except that the non-aqueous electrolyte was used.

### Comparative Example 5

### (1) Preparation of Non-Aqueous Electrolyte

A non-aqueous electrolyte was prepared by dissolving LiPF₆ in an organic solvent, in which ethylene carbonate (EC) and gamma-butyrolactone were mixed at a volume ratio of 30:70, such that the LiPF₆ was 1.0M, and lithium bis-(oxalato)borate (LiBOB), a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. LiBOB, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 6

### (1) Preparation of Non-Aqueous Electrolyte

A non-aqueous electrolyte was prepared by dissolving LiPF₆ in an organic solvent, in which ethylene carbonate (EC) and ethylmethyl carbonate (EMC) were mixed at a volume ratio of 30:70, such that the LiPF₆ was 1.0M, and lithium difluorophosphate, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. Lithium difluorophosphate, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 7

### (1) Preparation of Non-Aqueous Electrolyte

A non-aqueous electrolyte was prepared by dissolving LiPF₆ in an organic solvent, in which ethylene carbonate (EC) and ethylmethyl carbonate (EMC) were mixed at a volume ratio of 30:70, such that the LiPF₆ was 1.0M, and a compound represented by Formula 2A, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. The compound represented by Formula 2A, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

### Comparative Example 8

### (1) Preparation of Non-Aqueous Electrolyte

A non-aqueous electrolyte was prepared by dissolving LiPF₆ in an organic solvent, in which ethylene carbonate (EC) and ethylmethyl carbonate (EMC) were mixed at a volume ratio of 30:70, such that the LiPF₆ was 1.0M, and a compound represented by Formula 3A, a compound represented by Formula 1-a-1 prepared in Example 1 above, ethylene sulfate (ESa), 1,3-propane sultone (PS), vinylene carbonate (VC), and fluoroethylene carbonate (FEC) were added as additives to prepare a non-aqueous electrolyte. The compound represented by Formula 3A, the compound represented by Formula 1-a-1, ethylene sulfate (ESa), 1,3-propane sultone (PS), vinylene carbonate (VC), and fluoroethylene carbonate (FEC) were included in an amount of 0.5 wt%, 0.5 wt%, 0.5 wt%, 0.5 wt%, 3 wt% and 1 wt%, respectively in the non-aqueous electrolyte.

### (2) Preparation of a lithium secondary battery

A lithium secondary battery was prepared in the same manner as in Example 1 except that the non-aqueous electrolyte was used.

**[Table 1]**

| | Contain s gamma butyrol actone | additives (wt%, based on the weight of non-aqueous electrolyte) | | | | | | | | |
|---|---|---|---|---|---|---|---|---|---|---|
| | | The first additive | | The second additive (wt%) | The third additive (wt%) | | The auxiliary additive (wt%) | | | |
| | | type | wt% | Formula 1-a-1 | ESa | 1,3-PS | LiN O₃ | VC | FEC | LiBOB |
| Example 1 | O | LiDFP | 0.5 | 0.5 | - | 0.5 | - | 3 | 1 | - |
| Example 2 | O | LiDFP | 0.5 | 0.5 | 0.25 | 0.5 | - | 3 | 1 | - |
| Example 3 | O | LiDFP | 0.5 | 1 | - | - | - | 3 | 1 | - |
| Example 4 | O | Formula 2A | 0.5 | 0.5 | - | 0.5 | - | 3 | 1 | - |
| Example 5 | O | Formula 2A | 0.5 | 0.5 | 0.25 | 0.5 | - | 3 | 1 | - |
| Example 6 | O | Formula 2A | 0.5 | 1 | - | - | - | 3 | 1 | - |
| Example 7 | O | Formula 3A | 0.5 | 0.5 | - | 0.5 | - | 3 | 1 | - |
| Example 8 | O | Formula 3A | 0.5 | 0.5 | 0.25 | 0.5 | - | 3 | 1 | - |
| Example 9 | O | Formula 3A | 0.5 | 1 | - | - | - | 3 | 1 | - |
| Comparative Example 1 | O | - | - | - | - | 0.5 | - | 3 | 1 | - |
| Comparative Example 2 | O | - | - | - | - | - | 0.25 | 3 | 1 | - |
| Comparative Example 3 | O | LiDFP | 0.5 | - | 0.5 | - | - | 3 | 1 | - |
| Comparative Example 4 | O | - | - | 0.5 | 0.5 | 0.5 | - | 3 | 1 | - |
| Comparative Example 5 | O | - | - | 0.5 | 0.5 | 0.5 | - | 3 | 1 | 0.5 |
| Comparative Example 6 | × | LiDFP | 0.5 | 0.5 | 0.5 | 0.5 | - | 3 | 1 | - |
| Comparative Example 7 | × | Formula 2A | 0.5 | 0.5 | 0.5 | 0.5 | - | 3 | 1 | - |
| Comparative Example 8 | × | Formula 3A | 0.5 | 0.5 | 0.5 | 0.5 | - | 3 | 1 | - |

Meanwhile, the abbreviation of each compound has the following meaning in Table 1.
LiDFP: Lithium difluorophosphate
Esa: Ethylene sulfate
1,3-PS: 1,3-propane sultone
VC: Vinylene carbonate
FEC Fluoroethylene carbonate
LiBOB: Lithium bis-(oxalato)borate

### Experimental Examples

### Experimental Example 1 Evaluation of low temperature initial capacity retention rate

The lithium secondary batteries of Examples and Comparative Examples were charged at a 0.33C rate to 3.8V under a CC-CV condition at 25°C (0.05C cut-off), and were discharged at a 0.33C rate to 2.5V under a CC condition. The initial discharge capacity was then measured using PNE-0506 Charger/Discharger (Manufacturer: PNE solution).

Subsequently, the batteries were charged at a 0.33C rate to 3.8V under a CC-CV condition at -10°C (0.05C cut-off), and were discharged at a 0.33C rate to 2.5V under a CC condition. The discharge capacity was then measured.

The low-temperature initial capacity retention rate (%) was calculated using the initial capacity obtained at room temperature (25°C) and the discharge capacity obtained at low temperature, and the results are shown in Table 2 below.

### Experimental Example 2 Evaluation of low-temperature cycle performance

The above-prepared lithium secondary batteries of Examples and Comparative Examples were evaluated for low-temperature cycle performance.

Specifically, the lithium secondary batteries of Examples and Comparative Examples were charged at a 0.33C rate to 3.8V under a CC-CV condition at -10°C (0.05C cut-off), and were discharged at a 0.33C rate to 2.5V under a CC condition, which was set as one cycle. The discharge capacity after 1 cycle was measured.

Subsequently, after 100 cycles of charging and discharging were performed under the above-described charging and discharging conditions, the capacity retention rate (%) was measured. The capacity retention rate (%) was calculated according to Equation 1. The results are presented in Table 2 below. [Equation 1] 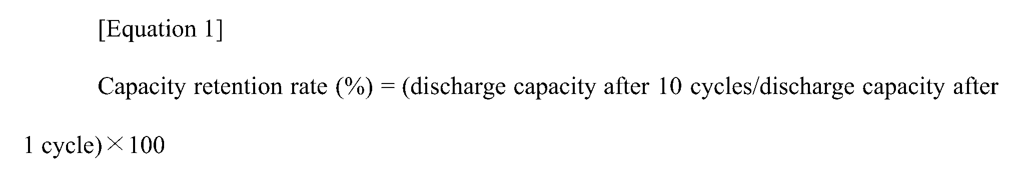 Capacity retention rate (%) = (discharge capacity after 10 cycles/discharge capacity after 1 cycle)×100

### Experimental Example 3 Evaluation of high-temperature cycle performance

The above-prepared lithium secondary batteries of Examples and Comparative Examples were evaluated for high-temperature cycle performance.

Specifically, the lithium secondary batteries of Examples and Comparative Examples were charged at a 0.33C rate to 3.8V under a CC-CV condition at 45°C (0.05C cut-off), and were discharged at a 0.33C rate to 2.5V under a CC condition, which was set as one cycle. The discharge capacity after 1 cycle was measured.

Subsequently, after 300 cycles of charging and discharging were performed under the above-described charging and discharging conditions, the capacity retention rate (%) was measured. The capacity retention rate (%) was calculated according to Equation 2. The results are presented in Table 2 below. [Equation 2] 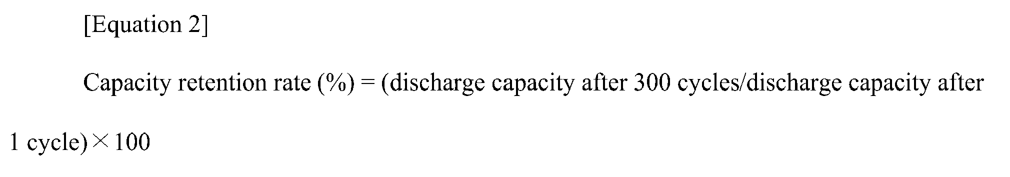 Capacity retention rate (%) = (discharge capacity after 300 cycles/discharge capacity after 1 cycle)×100

### Experimental Example 4 Evaluation of high-temperature storage characteristics

The lithium secondary batteries of Examples and Comparative Examples were charged at a 0.33C rate to 3.8V under a CC-CV condition at 25°C (0.05C cut-off), and were discharged at a 0.33C rate to 2.5V under a CC condition. The initial discharge capacity was then measured using PNE-0506 Charger/Discharger (Manufacturer: PNE solution).

Subsequently, after 16-week storage at high temperature (60°C), the batteries were charged at a 0.33C rate to 3.8V under a CC-CV condition (0.05C cut-off), and were discharged at a 0.33C rate to 2.5V under a CC condition. The discharge capacity was then measured.

The capacity retention rate (%) was calculated using the initial capacity obtained at room temperature (25°C) and the discharge capacity obtained after high-temperature storage, and the results are shown in Table 2 below.

**[Table 2]**

| | Low temperature capacity retention rate (%) | Capacity retention rate after low temperature cycles (%) | Capacity retention rate after high temperature cycles (%) | Capacity retention rate after high temperature storage (%) |
|---|---|---|---|---|
| Example 1 | 68.6 | 99.5 | 94.0 | 90.2 |
| Example 2 | 70.4 | 99.2 | 93.4 | 89.6 |
| Example 3 | 70.3 | 99.7 | 94.5 | 89.5 |
| Example 4 | 71.8 | 99.9 | 93.9 | 90.0 |
| Example 5 | 69.9 | 99.3 | 93.1 | 89.5 |
| Example 6 | 71.1 | 99.8 | 94.4 | 89.8 |
| Example 7 | 69.9 | 99.3 | 93.2 | 90.4 |
| Example 8 | 69.0 | 99.5 | 94.1 | 90.5 |
| Example 9 | 69.9 | 99.5 | 93.3 | 89.6 |
| Comparative Example 1 | 68.6 | 90.5 | 89.6 | 58.9 |
| Comparative Example 2 | 69.0 | 89.7 | 90.4 | 87.9 |
| Comparative Example 3 | 68.8 | 87.8 | 91.3 | 86.7 |
| Comparative Example 4 | 67.6 | 97.5 | 91.0 | 86.7 |
| Comparative Example 5 | 69.5 | 97.2 | 90.4 | 88.0 |
| Comparative Example 6 | 60.3 | 14.3 | 90.3 | 88.0 |
| Comparative Example 7 | 58.9 | 21.1 | 92.6 | 89.6 |
| Comparative Example 8 | 59.8 | 11.3 | 93.5 | 89.6 |

Referring to Table 2 above, it can be understood that the lithium secondary batteries of Examples 1 to 9 including the cyclic lactone compound as the organic solvent and the lithium secondary batteries of Comparative Examples 1 to 5 exhibited a low-temperature initial capacity retention rate of 67.6% or more, which is an improvement over the lithium secondary batteries of Comparative Examples 6 to 8 without comprising the cyclic lactone compound as the organic solvent.

Particularly, it may be confirmed that the lithium secondary batteries prepared in the Examples of the present disclosure, which included the first additive and the second additive as additives, exhibited significantly superior capacity retention rates after low-temperature cycles, capacity retention rates after high-temperature cycles, and capacity retention rates after high-temperature storage, when compared to the lithium secondary batteries of Comparative Examples 1 to 5, which did not include the additives of the present disclosure.

## Claims

1. A non-aqueous electrolyte, comprising a lithium salt, an organic solvent and additives,
wherein the organic solvent includes a carbonate-based organic solvent and a cyclic lactone compound,
the additive includes a first additive and a second additive,
the first additive is a fluorine-based compound,
the second additive is a compound represented by Formula 1, 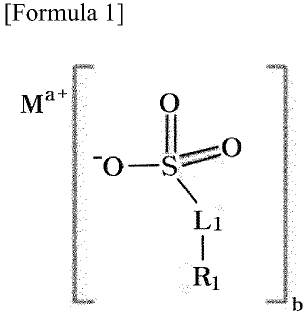
In Formula 1,
R₁ is -O-NO₂,
L₁ is an alkyleneoxy group having 1 to 5 carbon atoms,
M is a metal cation or an organic cation, and
a is the valence of M when M is a metal cation, a is 1 when M is an organic cation, and a=b.

2. The non-aqueous electrolyte according to claim 1, wherein the carbonate-based organic solvent includes a cyclic carbonate-based organic solvent.

3. The non-aqueous electrolyte according to claim 1, wherein the cyclic lactone compound is gamma-butyrolactone.

4. The non-aqueous electrolyte according to claim 1, wherein the fluorine-based compound includes at least one of a fluorine-based phosphate compound, a fluorine-based acrylate compound, and a fluorine-based propargyl compound.

5. The non-aqueous electrolyte according to claim 4, wherein the fluorine-based phosphate compound is lithium difluorophosphate.

6. The non-aqueous electrolyte according to claim 4, wherein the fluorine-based acrylate compound includes a compound represented by Formula 2, 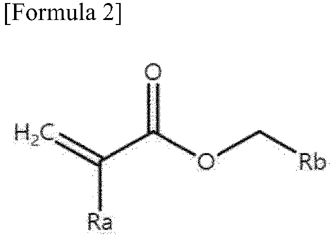 In Formula 2,
Ra is hydrogen or an alkyl group having 1 to 3 carbon atoms,
Rb is an alkyl group having 1 to 20 carbon atoms substituted with at least one fluorine.

7. The non-aqueous electrolyte according to claim 6, wherein, in Formula 2, Ra is hydrogen, and Rb is an alkyl group having 3 to 15 carbon atoms, in which at least one fluorine is substituted.

8. The non-aqueous electrolyte according to claim 6, wherein the fluorine-based acrylate compound includes at least one selected from compounds represented by Formula 2A to Formula 2C,

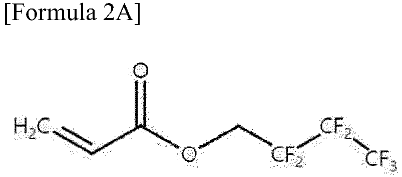

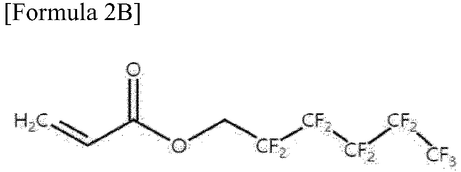

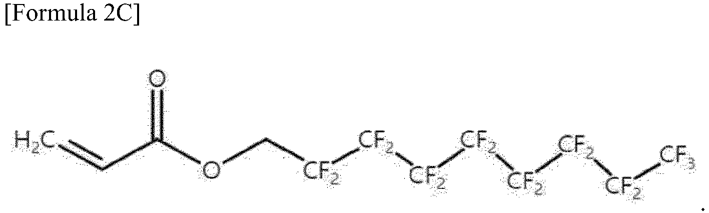

9. The non-aqueous electrolyte according to claim 4,
wherein the fluorine-based propargyl compound includes a compound represented by Formula 3, 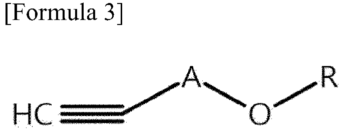 In Formula 3,
A is -C(O)- or -CH₂-,
R is an alkyl group having 1 to 20 carbon atoms, in which at least one fluorine is substituted.

10. The non-aqueous electrolyte according to claim 9, wherein, in Formula 3, R is an alkyl group having 3 to 15 carbon atoms, in which at least one fluorine is substituted.

11. The non-aqueous electrolyte according to claim 9, wherein the fluorine-based propargyl compound includes at least one selected from compounds represented by Formula 3A to Formula 3D,

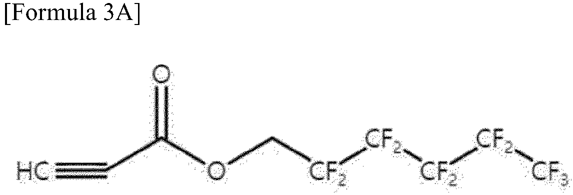

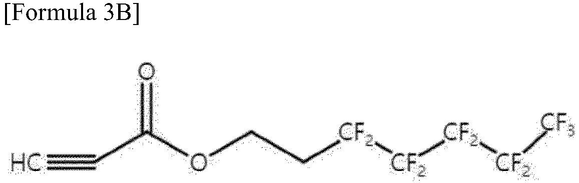

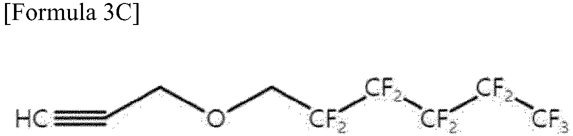

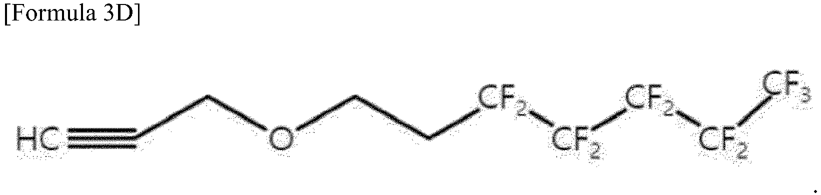

12. The non-aqueous electrolyte according to claim 1, wherein the first additive is included in an amount of 0.01 wt% to 10 wt% based on a total weight of the non-aqueous electrolyte.

13. The non-aqueous electrolyte according to claim 1, wherein in Formula 1, M is a metal cation, and M is any one selected from Li, K, Ca, Mg and Cs.

14. The non-aqueous electrolyte according to claim 1, wherein in Formula 1, M is an organic cation, and M is any one selected from compounds represented by Formula M-1 to Formula M-6: 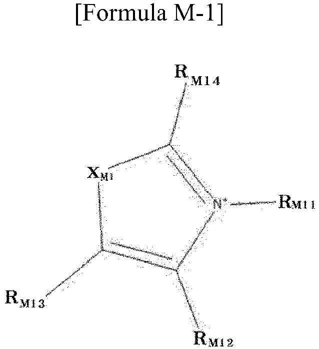 In Formula M-1, X_{M1} is -N(R_{M15})- or -S-, and R_{M11}, R_{M12}, R_{M13}, R_{M14} and R_{M15} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms, 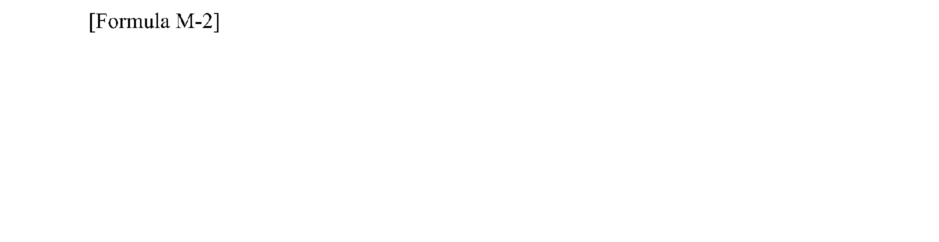 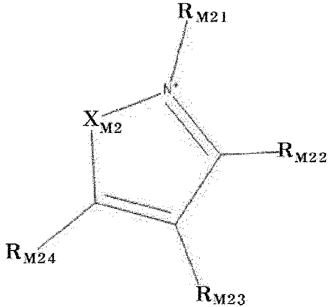 In Formula M-2, X_{M2} is -N(R_{M25})- or -S-, and R_{M21}, R_{M22}, R_{M23}, R_{M24} and R_{M25} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, 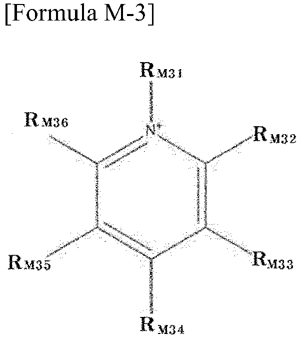 In Formula M-3, R_{M31}, R_{M32}, R_{M33}, R_{M34}, R_{M35} and R_{M36} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, 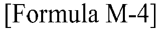 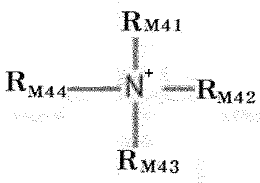 In Formula M-4, R_{M41}, R_{M42}, R_{M43} and R_{M44} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M41}, R_{M42}, R_{M43} and R_{M44} may be bonded to each other to form an aliphatic hydrocarbon ring, 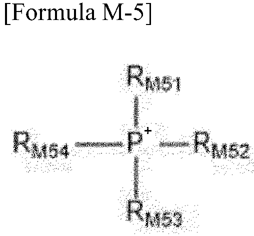 In Formula M-5, R_{M51}, R_{M52}, R_{M53} and R_{M54} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M51}, R_{M52}, R_{M53} and R_{M54} may be bonded to each other to form an aliphatic hydrocarbon ring, 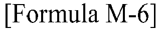 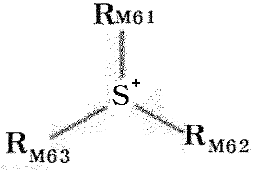 In Formula M-6, R_{M61}, R_{M62} and R_{M63} are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of R_{M61}, R_{M62} and R_{M63} may be bonded to each other to form an aliphatic hydrocarbon ring.

15. The non-aqueous electrolyte according to claim 1, wherein the compound represented by Formula 1 includes a compound represented by Formula 1-A: 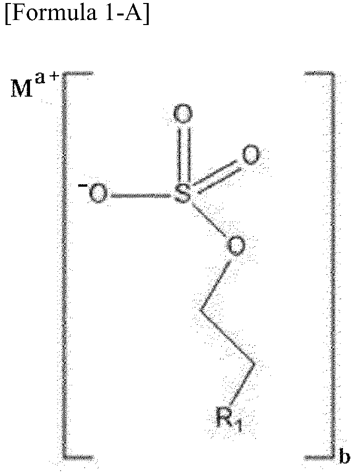 In Formula 1-A, each of M, a, b and R₁ is as defined in Formula 1.

16. The non-aqueous electrolyte according to claim 1, wherein the compound represented by Formula 1 includes a compound represented by Formula 1-A-1: 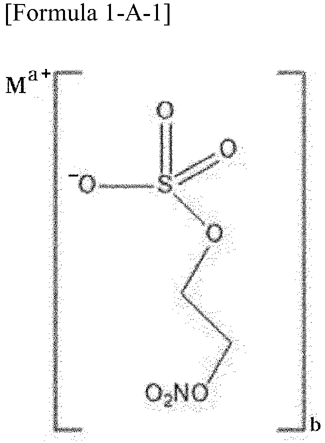 In Formula 1-A-1, each of M, a, and b is as defined in Formula 1.

17. The non-aqueous electrolyte according to claim 1, wherein the compound represented by Formula 1 includes a compound represented by Formula 1-a-1:

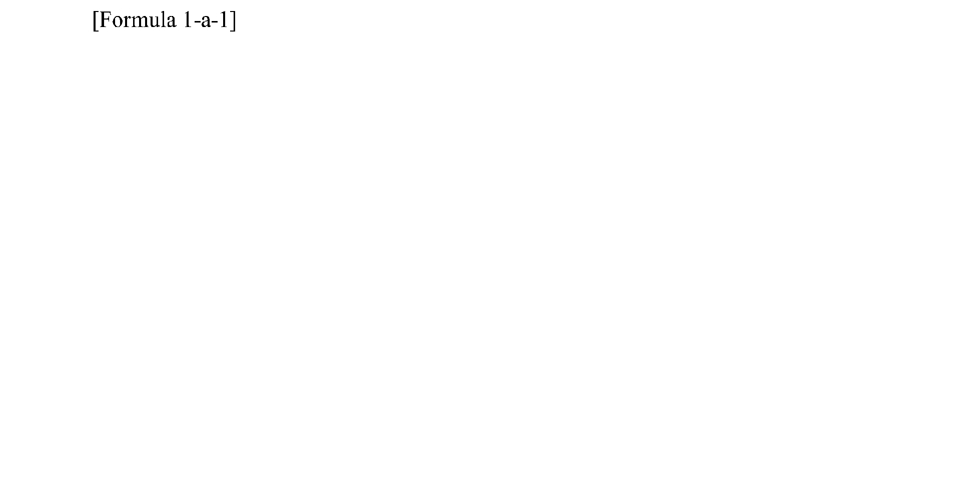

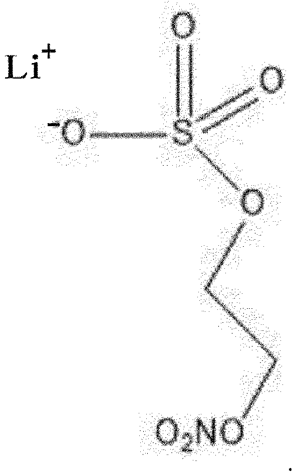

18. The non-aqueous electrolyte according to claim 1, wherein the compound represented by Formula 1 is included in an amount of 0.1 wt% to 3.0 wt% based on a total weight of the non-aqueous electrolyte.

19. The non-aqueous electrolyte according to claim 1, comprising
a third additive,
wherein the third additive includes at least one of ethylene sulfate and 1,3-propane sultone.

20. The non-aqueous electrolyte according to claim 19, wherein a total content of ethylene sulfate and 1,3-propane sultone is 0.1 wt% to 2.0 wt% based on a total weight of the non-aqueous electrolyte.

21. A lithium secondary battery comprising a positive electrode;
a negative electrode facing the positive electrode;
a separator interposed between the negative electrode and the positive electrode; and
the non-aqueous electrolyte of claim 1.

22. The lithium secondary battery according to claim 21, wherein the negative electrode includes a negative electrode active material, and the negative electrode active material includes at least one selected from a carbon-based active material and a silicon-based active material.

23. The lithium secondary battery according to claim 21, wherein the positive electrode includes a positive electrode active material, and the positive electrode active material includes lithium iron phosphate.
